# EUROPEAN PATENT APPLICATION

(11) **EP 4 749 752 A1**
(43) Date of publication of application: **27.05.2026**
(21) Application number: 24861736.7
(22) Date of filing: 01.08.2024
(51) Int. Cl.: H01M 10/0585

(54) **LAMINATION SYSTEM**

(30) Priority: 04.09.2023 CN 202311132272
(71) Applicant: Contemporary Amperex Technology Co., Limited, Ningde, Fujian 352100 (CN)
(72) Inventor: LI, Zhenning, Ningde, Fujian 352100 (CN); XIAO, Qianliang, Ningde, Fujian 352100 (CN); FENG, Xin, Ningde, Fujian 352100 (CN); WEI, Yimin, Ningde, Fujian 352100 (CN)
(74) Representative: Ziebig Hengelhaupt Intellectual Property Attorneys Patentanwaltskanzlei PartGmbB
(86) International application number: PCT/CN2024/109251
(87) International publication number: WO 2025/050891

(57) **Abstract**

The present application provides a stacking system, and relates to the field of batteries. The stacking system comprises a first transfer mechanism, a second transfer mechanism, a separator unwinding mechanism and a stacking device. The first transfer mechanism is used for transferring a first electrode plate. The second transfer mechanism is used for transferring a second electrode plate. The polarity of the second electrode plate is opposite to that of the first electrode plate. The separator unwinding mechanism is used for unwinding a separator. The stacking device is used for receiving the first electrode plate, the separator and the second electrode plate, and for stacking the first electrode plate, the separator and the second electrode plate to form a battery cell. The first transfer mechanism, the second transfer mechanism and the separator unwinding mechanism of the stacking system can respectively provide the first electrode plate, the second electrode plate and the separator to the stacking device, the stacking device can stack the first electrode plate, the separator and the second electrode plate to form a battery cell, thereby realizing automatic stacking, which is conducive to improving stacking quality and production efficiency.

## Description

### CROSS-REFERENCE TO RELATED APPLICATION

The present application claims priority to Chinese Patent Application No. 202311132272.2 filed on September 04, 2023 and entitled "STACKING SYSTEM," which is incorporated herein by reference in its entirety.

### TECHNICAL FIELD

The present application relates to the field of batteries, and in particular, to a stacking system.

### BACKGROUND

Batteries are very widely used in the field of new energy, such as electric vehicles or new-energy vehicles. The new-energy vehicles and electric vehicles have become a new development trend in the automobile industry. The electrode assembly is a component of a battery cell where an electrochemical reaction occurs. The electrode assembly includes a wound type electrode assembly and a stacked type electrode assembly. Currently, the production efficiency of stacked type electrode assemblies is low.

### SUMMARY OF THE INVENTION

An objective of embodiments of the present application is to provide a stacked system, which is intended to improve the problem of low production efficiency of stacked type electrode assemblies in the related art.

An embodiment of the present application provides a stacking system, the stacking system comprises a first transfer mechanism, a second transfer mechanism, a separator unwinding mechanism and a stacking device, the first transfer mechanism is used for transferring a first electrode plate; the second transfer mechanism is used for transferring a second electrode plate, and the polarity of the second electrode plate is opposite to that of the first electrode plate; the separator unwinding mechanism is used for unwinding the separator; the stacking device is used for receiving the first electrode plate, the separator and the second electrode plate, and for stacking the first electrode plate, the separator and the second electrode plate to form a battery cell.

In the above technical solution, the first transfer mechanism, the second transfer mechanism and the separator unwinding mechanism of the stacking system can respectively provide the first electrode plate, the second electrode plate and the separator to the stacking device, the stacking device can stack the first electrode plate, the separator and the second electrode plate to form a battery cell, thereby realizing automatic stacking, which is conducive to improving stacking quality and production efficiency.

As an optional technical solution of the embodiment of the present application, the separator unwinding mechanism has an output portion for outputting the separator; the stacking device comprises a stacking platform and a first driving mechanism, the stacking platform has a first stacking position and a second stacking position, and along a first direction, the first stacking position and the second stacking position are respectively located on two sides of the output portion; the stacking platform is used for receiving the first electrode plate at the first stacking position and for receiving the second electrode plate at the second stacking position; the first driving mechanism is used for driving the stacking platform to move along the first direction so that the stacking platform switches between the first stacking position and the second stacking position.

In the above technical solution, the first driving mechanism can drive the stacking platform to switch between the first stacking position and the second stacking position. When the stacking platform is located at the first stacking position, the stacking platform is located at one side of the output portion along the first direction. When the stacking platform is located at the second stacking position, the stacking platform is located at the other side of the output portion along the first direction. The stacking platform can receive the first electrode plate at the first stacking position, one end of the separator can be arranged on the stacking platform, and during the switching of the stacking platform from the first position to the second position, since the first stacking position and the second stacking position are respectively located on two sides of the output portion, the separator will gradually cover the first electrode plate. The stacking platform reaches the second position, receives the second electrode plate, and then switches from the second position to the first position. During the switching of the stacking platform from the second position to the first position, since the first stacking position and the second stacking position are respectively located on two sides of the output portion, the separator will gradually cover the second electrode plate, the stacking platform reaches the first position and can again receive the first electrode plate. As the stacking platform switches back and forth between the first position and the second position, the first electrode plate, the separator and the second electrode plate are gradually stacked to form a battery cell.

As an optional technical solution of the embodiment of the present application, the stacking device comprises a pressing mechanism, the pressing mechanism is arranged on the stacking platform and the pressing mechanism is used for pressing the first electrode plate, the separator or the second electrode plate against the stacking platform.

In the above technical solution, by providing the pressing mechanism, the first electrode plate, the separator or the second electrode plate is pressed against the stacking platform during the switching of the stacking platform between the first position and the second position, thereby reducing the risk of the first electrode plate, the separator or the second electrode plate detaching from the stacking platform, which is conducive to improving the reliability of the stacking device, improving stacking quality, reducing the risk of shutdown, and ensuring production efficiency to a certain extent.

As an optional technical solution of the embodiment of the present application, the pressing mechanism comprises a pressing member and a second driving mechanism, the pressing member is used for pressing the first electrode plate, the separator or the second electrode plate against the stacking platform; the second driving mechanism is connected to the pressing member, the second driving mechanism is used for driving the pressing member to move along a second direction and a third direction, the second direction is the stacking direction of the first electrode plate, the separator and the second electrode plate, the third direction intersects with the second direction, and the first direction intersects with the plane where the second direction and the third direction are located.

In the above technical solution, the second driving mechanism is provided to drive the pressing member to move along the second direction and the third direction, thereby facilitating the change of the position of the pressing member and facilitating the pressing member to press the first electrode plate, the separator or the second electrode plate. When the stacking platform is in the first position or the second position, the second driving mechanism can drive the pressing member to move, so that the pressing member presses the uppermost one of the first electrode plate, the separator and the second electrode plate.

As an optional technical solution of the embodiment of the present application, along the third direction, both sides of the stacking platform are provided with the pressing member.

In the above technical solution, by arranging the pressing members on both sides of the stacking platform along the third direction, it helps to enhance the pressing effect on the first electrode plate, the separator or the second electrode plate, thereby reducing the risk of the first electrode plate, the separator or the second electrode plate detaching from the stacking platform, which is conducive to improving the reliability of the stacking device, improving stacking quality, reducing the risk of shutdown, and ensuring production efficiency to a certain extent.

As an optional technical solution of the embodiment of the present application, the pressing member comprises a pressing portion, the pressing portion is used for contacting the first electrode plate, the separator or the second electrode plate, and the pressing portion is in a sheet shape.

In the above technical solution, by providing the pressing portion in a sheet shape, the thickness of the pressing portion along the second direction is smaller. In this way, when the stacking platform switches between the first position and the second position, the redundancy of the separator caused by the separator covering the pressing portion is smaller. In addition, the pressing portion is in a sheet shape, so that the contact area between the pressing portion and the first electrode plate, the separator or the second electrode plate is larger, which is not easy to cause stress concentration on the first electrode plate, the separator or the second electrode plate, thereby helping to improve stacking quality.

As an optional technical solution of the embodiment of the present application, the stacking device comprises a first smoothing mechanism, and the first smoothing mechanism is used for smoothing the separator when the stacking platform switches between the first stacking position and the second stacking position.

In the above technical solution, the first smoothing mechanism is provided to smooth the separator when the stacking platform switches between the first stacking position and the second stacking position, thereby reducing the risk of wrinkling of the separator and making the separator stacked with the first electrode plate and the second electrode plate smoother, thereby improving stacking quality.

As an optional technical solution of the embodiment of the present application, the stacking device comprises a frame, the first smoothing mechanism comprises a first smoothing member, the first smoothing member is used for smoothing the separator, the first smoothing member is connected to the frame, and the stacking platform is movably provided on the frame along the first direction.

In the above technical solution, the stacking platform is movably provided on the frame along the first direction, and when the stacking platform moves from the first stacking position to the second stacking position, or from the second stacking position to the first stacking position, the first smoothing member can smooth the separator. The risk of wrinkling of the separator is reduced, so that the separator stacked with the first electrode plate and the second electrode plate is relatively smooth, thereby improving stacking quality.

As an optional technical solution of the embodiment of the present application, the first smoothing member is made of a flexible material.

In the above technical solution, the first smoothing member can be fixed to the frame, and in this case, the first smoothing member is made of a flexible material. In this way, on the one hand, as the number of stacked layers increases, the thickness of stacking also increases, and the first smoothing member can be deformed to adapt to the increase in the number of stacked layers. On the other hand, the first smoothing member made of a flexible material is less likely to cause damage to the separator, which is conducive to improving stacking quality.

As an optional technical solution of the embodiment of the present application, the output portion is connected to the frame.

In the above technical solution, the output portion is connected to the frame to determine the position of the output portion, so that the output portion can be located between the first stacking position and the second stacking position, so as to improve the accuracy of subsequent stacking.

As an optional technical solution of the embodiment of the present application, the stacking device comprises a flipping mechanism, the flipping mechanism and the stacking platform are arranged along the first direction, the stacking platform can move along the first direction to transport the battery cell to the flipping mechanism, and the flipping mechanism is used for driving the battery cell to flip so that the separator covers the outside of the battery cell.

In the above technical solution, after the stacking platform completes stacking, it can move along the first direction to supply the battery cell to the flipping mechanism, and the flipping mechanism receives the battery cell and drives the battery cell to flip, so that the separator covers the outside of the battery cell. On the one hand, the separator can protect the battery cell. On the other hand, the separator insulates the battery cell from other components.

As an optional technical solution of the embodiment of the present application, the stacking device comprises a second smoothing mechanism, and the second smoothing mechanism is used for smoothing at least a portion of the separator located between the flipping mechanism and the output portion along the extension direction of the separator.

In the above technical solution, the second smoothing mechanism is provided to smooth at least a portion of the separator between the flipping mechanism and the output portion. In this way, the insulating film covering the outside of the battery cell is relatively smooth and less prone to wrinkling, thereby improving stacking quality.

As an optional technical solution of the embodiment of the present application, the second smoothing mechanism comprises a third driving mechanism and a second smoothing member, the second smoothing member is connected to the third driving mechanism, and the third driving mechanism is used for driving the second smoothing member to move along the extension direction of the separator so that the second smoothing member smooths the separator.

In the above technical solution, by providing the third driving mechanism, the second smoothing member is driven to move along the extension direction of the separator, thereby smoothing the separator. The structure is relatively simple and the smoothing effect is good.

As an optional technical solution of the embodiment of the present application, the second smoothing member is in a wheel shape, and the third driving mechanism is further used for driving the second smoothing member to rotate.

In the above technical solution, the second smoothing member can move along the extension direction of the separator while rotating relative to the separator. In this way, rolling friction is formed between the second smoothing member and the separator, which reduces the friction force on the separator and is less likely to cause damage to the separator, thereby helping to improve stacking quality.

As an optional technical solution of the embodiment of the present application, the separator unwinding mechanism comprises a cutter unit, and the cutter unit is used for cutting off the separator.

In the above technical solution, by providing the cutter unit, after the first electrode plate, the separator and the second electrode plate are stacked, the separator is cut off to prepare for the stacking of the next battery cell.

As an optional technical solution of the embodiment of the present application, the first transfer mechanism comprises a first pickup unit and a first detection unit, the first pickup unit is used for picking up the first electrode plate, the first detection unit is used for detecting the number of the first electrode plates picked up by the first pickup unit in a single time, and the first pickup unit responds to the first detection unit; and/or the second transfer mechanism comprises a second pickup unit and a second detection unit, the second pickup unit is used for picking up the second electrode plate, the second detection unit is used for detecting the number of the second electrode plates picked up by the second pickup unit in a single time, and the second pickup unit responds to the second detection unit.

In the above technical solution, a plurality of first electrode plates can be stored in a bin, and two adjacent first electrode plates are prone to stick together. The first detection unit is arranged to detect the number of the first electrode plates picked up by the first pickup unit, so that when the first pickup unit picks up multiple first electrode plates, the first pickup unit is controlled to transfer the picked up first electrode plates to a waste area or a recovery area. Similarly, a plurality of second electrode plates can be stored in a bin, and two adjacent second electrode plates are prone to stick together. The second detection unit is arranged to detect the number of the second electrode plates picked up by the second pickup unit, so that when the second pickup unit picks up multiple second electrode plates, the second pickup unit is controlled to transfer the picked up second electrode plates to a waste area or a recovery area.

As an optional technical solution of the embodiment of the present application, the first detection unit comprises a first thickness detection unit, the first thickness detection unit is used for detecting the thickness of the first electrode plates picked up by the first pickup unit in a single time to obtain the number of the first electrode plates; and/or the second detection unit comprises a second thickness detection unit, the second thickness detection unit is used for detecting the thickness of the second electrode plates picked up by the second pickup unit in a single time to obtain the number of the second electrode plates.

In the above technical solution, the first thickness detection unit obtains the number of the first electrode plates by detecting the thickness of the first electrode plates picked up by the first pickup unit, thereby determining whether there are multiple first electrode plates picked up by the first pickup unit that stick together. If so, the first pickup unit can respond to the first thickness detection unit to transfer the first electrode plates it picks up to a waste area or a recovery area. Similarly, the second thickness detection unit obtains the number of the second electrode plates by detecting the thickness of the second electrode plates picked up by the second pickup unit, thereby determining whether there are multiple second electrode plates picked up by the second pickup unit that stick together. If so, the second pickup unit can respond to the second thickness detection unit to transfer the second electrode plates it picks up to a waste area or a recovery area.

As an optional technical solution of the embodiment of the present application, the stacking system further comprises a first detection mechanism, the first detection mechanism is arranged upstream of the stacking device, the first detection mechanism is used for detecting the appearance of the first electrode plate and the second electrode plate, and the first transfer mechanism and the second transfer mechanism both respond to the first detection mechanism.

In the above technical solution, the first detection mechanism is provided to detect the appearance of the first electrode plate and the second electrode plate to confirm whether the first electrode plate transferred by the first transfer mechanism and the second electrode plate transferred by the second transfer mechanism meet the standards. If the standards are met, the first transfer mechanism is allowed to transfer the first electrode plate it picks up to the stacking device, and the second transfer mechanism is allowed to transfer the second electrode plate it picks up to the stacking device. If the standards are not met, the first transfer mechanism transfers the first electrode plate it transfers to a waste area or a recovery area, and the second transfer mechanism transfers the second electrode plate it transfers to a waste area or a recovery area.

As an optional technical solution of the embodiment of the present application, the stacking system comprises a first adhesive applying mechanism, the first adhesive applying mechanism is arranged downstream of the stacking device and the first adhesive applying mechanism is used for applying a finishing adhesive or a corner adhesive to the battery cell.

In the above technical solution, by arranging the first adhesive applying mechanism, after the stacking device completes the stacking to form the battery cell, a finishing adhesive or a corner adhesive is applied to the battery cell to stabilize the shape of the battery cell and reduce the risk of collapse of the battery cell.

As an optional technical solution of the embodiment of the present application, the first adhesive applying mechanism comprises an adhesive unwinding mechanism, an adhesive applying component, a pulling mechanism and a cutter mechanism, the adhesive unwinding mechanism is used for unwinding an adhesive tape; the pulling mechanism is used for pulling the adhesive tape to convey the adhesive tape to the adhesive applying component; the cutter mechanism is used for cutting off the portion of the adhesive tape located between the pulling mechanism and the adhesive applying component to obtain an adhesive, and the adhesive applying component is used for applying the adhesive to the battery cell.

In the above technical solution, the pulling mechanism can pull the adhesive tape, thereby unwinding the adhesive tape. In this way, the unwinding can be performed according to the required amount of adhesive tape. After the pulling mechanism pulls the adhesive tape and supplies the adhesive tape to the adhesive applying component, the cutter mechanism can cut off the adhesive tape between the pulling mechanism and the adhesive applying component to obtain an adhesive. The adhesive applying component can apply the adhesive to the battery cell to complete the application of a finishing adhesive or a corner adhesive. The first adhesive applying mechanism is used to perform the adhesive applying operation, and the adhesive of the required length can be unwound each time as needed and applied to the battery cell. In this way, the length of the adhesive is appropriate, which can not only effectively stabilize the shape of the battery cell and reduce the risk of collapse of the battery cell, but also not easily interfere with other components.

As an optional technical solution of the embodiment of the present application, the pulling mechanism comprises a first clamping unit and a second clamping unit, both the first clamping unit and the second clamping unit are used for clamping the adhesive tape, and the second clamping unit can move toward or away from the first clamping unit.

In the above technical solution, when the adhesive tape needs to be unwound, the first clamping unit is loosened, and the second clamping unit clamps the adhesive tape and moves toward the first clamping unit or away from the first clamping unit to pull the adhesive tape to unwind. When the first clamping unit moves into position, the adhesive tape of a fixed length is unwound. At this time, the first clamping unit and the second clamping unit both clamp the adhesive tape, thereby facilitating the cutter mechanism to cut off the adhesive tape to form the adhesive. Afterwards, the second clamping unit releases the adhesive tape and moves away from the first clamping unit or toward the first clamping unit to complete the reset and prepare for the next pulling.

As an optional technical solution of the embodiment of the present application, the adhesive applying component comprises a fourth driving mechanism and an adsorption member, the adsorption member is used for adsorbing the adhesive, the fourth driving mechanism is connected to the adsorption member, and the fourth driving mechanism is used for driving the adsorption member to move so as to apply the adhesive to the battery cell.

In the above technical solution, the adhesive is adsorbed by the adsorption member, which can not only pick up the adhesive better but also not easily damage the adhesive. The adsorption member is driven to move by the fourth driving mechanism to transfer the adhesive and apply the adhesive to the battery cell.

As an optional technical solution of the embodiment of the present application, the stacking system comprises a plurality of the first adhesive applying mechanisms, and the plurality of the first adhesive applying mechanisms are all used for applying the adhesive to the battery cells.

In the above technical solution, by providing a plurality of first adhesive applying mechanisms, the plurality of first adhesive applying mechanisms can perform adhesive applying simultaneously, thereby improving adhesive applying efficiency and improving production efficiency.

As an optional technical solution of the embodiment of the present application, the stacking system comprises a hot pressing device, the hot pressing device is arranged downstream of the stacking device and the hot pressing device is used for hot pressing the battery cell.

In the above technical solution, by providing the hot pressing device to hot press the battery cell, on the one hand, the flatness of the battery cell can be improved so that the thickness of the battery cell meets the requirements and has high consistency. On the other hand, it can reduce the wrinkles of the separator, expel the air inside the battery cell, make the separator and the first electrode plate, and the separator and the second electrode plate tightly attached together, shorten the diffusion distance of metal ions, and reduce the internal resistance of the battery cell.

As an optional technical solution of the embodiment of the present application, the hot pressing device comprises a hot pressing workbench, a hot pressing member and a fifth driving mechanism, the hot pressing workbench is used for placing the battery cell; the hot pressing member is arranged opposite to the hot pressing workbench; the fifth driving mechanism is connected to the hot pressing member, and the fifth driving mechanism is used for driving the hot pressing member toward the battery cell so that the hot pressing member can hot press the battery cell.

In the above technical solution, the battery cell can be placed on the hot pressing workbench, and in this case, the fifth driving mechanism can drive the hot pressing member toward the battery cell, thereby hot pressing the battery cell. After the hot pressing is completed, the fifth driving mechanism can drive the hot pressing member away from the battery cell, thereby allowing the battery cell to be transferred to the next station and prepare for the next hot pressing.

As an optional technical solution of the embodiment of the present application, a first probe and a second probe are provided on the hot pressing member, and the first probe and the second probe are used for being electrically connected to the first electrode plate and the second electrode plate of the battery cell respectively when the hot pressing member hot presses the battery cell.

In the above technical solution, by providing a first probe and a second probe, the first probe and the second probe can be electrically connected to the first electrode plate and the second electrode plate of the battery cell respectively, so as to perform a resistance test on the battery cell.

As an optional technical solution of the embodiment of the present application, the surface of the hot pressing member facing the hot pressing workbench is provided with an anti-sticking coating.

In the above technical solution, by providing an anti-sticking coating on the surface of the hot pressing member facing the hot pressing workbench, it can not only reduce the risk of adhesion between the hot pressing member and the battery cell, but also reduce the risk of other impurities adhering to the hot pressing member, thereby reducing the risk of damage to the battery cell caused by the hot pressing member when hot pressing the battery cell.

As an optional technical solution of the embodiment of the present application, the anti-sticking coating comprises a ceramic layer.

In the above technical solution, a ceramic layer is used as the anti-sticking coating, which has a good anti-sticking effect and a low cost.

As an optional technical solution of the embodiment of the present application, the stacking system comprises a tab welding mechanism, the tab welding mechanism is arranged downstream of the stacking device and the tab welding mechanism is used for welding tabs on the battery cell.

In the above technical solution, the tab welding mechanism is provided to facilitate automatic welding of the tab for the battery cell, thereby improving the degree of automation of the stacking system.

As an optional technical solution of the embodiment of the present application, the tab welding mechanism comprises a first tab providing mechanism, a second tab providing mechanism, a first welding mechanism, a second welding mechanism and a conveying mechanism, the first tab providing mechanism is arranged at a first station, and the first tab providing mechanism is used for providing a first tab; the second tab providing mechanism is arranged at a second station, and the second tab providing mechanism is used for providing a second tab; the first welding mechanism is arranged at a third station, and the first welding mechanism is used for welding the first tab and the first electrode plate; the second welding mechanism is arranged at a fourth station, and the second welding mechanism is used for welding the second tab and the second electrode plate; the conveying mechanism is used for conveying the battery cell to the first station, the second station, the third station and the fourth station.

In the above technical solution, the conveying mechanism conveys the battery cell to the first station, the second station, the third station and the fourth station, and when the battery cell passes through the first station, the first tab providing mechanism provides the first tab to the battery cell. When the battery cell passes through the second station, the second tab providing mechanism provides the second tab to the battery cell. When the battery cell passes through the third station, the first welding mechanism welds the first tab to the battery cell. When the battery cell passes through the fourth station, the second welding mechanism welds the second tab to the battery cell to complete the automatic welding of the first electrode plate and the battery cell and the automatic welding of the second electrode plate and the battery cell, with a high degree of automation.

As an optional technical solution of the embodiment of the present application, the conveying mechanism comprises a turntable, and the first tab providing mechanism, the second tab providing mechanism, the first welding mechanism and the second welding mechanism are arranged along the circumferential direction of the turntable.

In the above technical solution, the conveying mechanism comprises a turntable, and the battery cells are conveyed to the first station, the second station, the third station and the fourth station through the rotation of the turntable. The turntable occupies a small area and has high conveying efficiency and conveying stability.

As an optional technical solution of the embodiment of the present application, a positioning clamp is provided on the turntable, and the positioning clamp is used for positioning the battery cell, the first tab and the second tab.

In the above technical solution, the positioning clamp is provided to position the battery cell, the first tab and the second tab, so that the relative position of the first tab and the battery cell, and the relative position of the second tab and the battery cell are not easily changed, which is conducive to improving the welding effect.

As an optional technical solution of the embodiment of the present application, the positioning clamp comprises a supporting platform, a first clamping jaw, a second clamping jaw and a third clamping jaw, the supporting platform is connected to the turntable, the first clamping jaw, the second clamping jaw and the third clamping jaw are connected to the supporting platform, the first clamping jaw is used for positioning the battery cell on the supporting platform, the second clamping jaw is used for positioning the first tab on the battery cell, and the third clamping jaw is used for positioning the second tab on the battery cell.

In the above technical solution, the supporting platform is connected to the turntable, and the turntable can convey the supporting platform to the first station, the second station, the third station and the fourth station. The first clamping jaw can position the battery cell on the supporting platform, so that the relative position of the battery cell and the supporting platform is not easily changed. The second clamping jaw can position the first tab on the battery cell, so that the relative position of the first tab and the battery cell is not easily changed. The third clamping jaw can position the second tab on the battery cell, so that the relative position of the second tab and the battery cell is not easily changed, which is conducive to improving the welding effect.

As an optional technical solution of the embodiment of the present application, the first welding mechanism comprises a first welding head and a first dust removal mechanism, the first welding head is used for welding the first tab and the first electrode plate, and the first dust removal mechanism is used for removing dust from the first welding head; and/or the second welding mechanism comprises a second welding head and a second dust removal mechanism, the second welding head is used for welding the second tab and the second electrode plate, and the second dust removal mechanism is used for removing dust from the second welding head.

In the above technical solution, the first dust removal mechanism is provided to remove dust from the first welding head, so that the first welding head is kept clean before welding the first tab and the battery cell each time, which is conducive to improving the welding effect. Similarly, the second dust removal mechanism is provided to remove dust from the second welding head, so that the second welding head is kept clean before welding the second tab and the battery cell each time, which is conducive to improving the welding effect.

As an optional technical solution of the embodiment of the present application, the tab welding mechanism further comprises a second adhesive applying mechanism, the second adhesive applying mechanism is arranged at a fifth station, the conveying mechanism is also used for conveying the battery cell to the fifth station, and the second adhesive applying mechanism is used for applying the adhesive at the welding position between the first tab and the first electrode plate and at the welding position between the second tab and the second electrode plate.

In the above technical solution, the conveying mechanism can convey the battery cells to the first, second, third, fourth and fifth stations, at the third station, the first welding mechanism welds the first electrode plate to the battery cell, and at the fourth station, the second welding mechanism welds the second electrode plate to the battery cell. At the fifth station, the second adhesive applying mechanism can apply the adhesive to the welding position between the first tab and the first electrode plate and the welding position between the second tab and the second electrode plate to protect the welding positions.

As an optional technical solution of the embodiment of the present application, the tab welding mechanism comprises a second detection mechanism, the second detection mechanism is arranged at a sixth station, the conveying mechanism is also used for conveying the battery cell to the sixth station, and the second detection mechanism is used for detecting the appearance of the battery cell.

In the above technical solution, the conveying mechanism can convey the battery cells to the first, second, third, fourth, fifth and sixth stations, at the third station, the first welding mechanism welds the first electrode plate to the battery cell, and at the fourth station, the second welding mechanism welds the second electrode plate to the battery cell. At the fifth station, the second adhesive applying mechanism can apply the adhesive to the welding position between the first tab and the first electrode plate and the welding position between the second tab and the second electrode plate to protect the welding positions. At the sixth station, the second detection mechanism can detect the appearance of the battery cell after welding and adhesive application to confirm whether the battery cell meets the standards.

As an optional technical solution of the embodiment of the present application, the stacking system comprises a first adhesive applying mechanism, a hot pressing device and a tab welding mechanism, the first adhesive applying mechanism is used for applying a finishing adhesive or a corner adhesive to the battery cell, the hot pressing device is used for hot pressing the battery cell, the tab welding mechanism is used for welding tabs on the battery cell, the first adhesive applying mechanism is arranged downstream of the stacking device, the hot pressing device is arranged downstream of the first adhesive applying mechanism, and the tab welding mechanism is arranged downstream of the hot pressing device.

In the above technical solution, the first adhesive applying mechanism can apply a finishing adhesive or a corner adhesive to battery cells where stacking has been completed, the hot pressing device can hot press the battery cells after the adhesive has been applied, and the tab welding mechanism can weld the first tab and the second tab to the battery cells where hot pressing has been completed to produce the final battery cells with a high degree of automation.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural diagram of a stacking system provided in some embodiments of the present application;
FIG. 2 is a schematic structural diagram of a separator unwinding mechanism connected to a stacking device provided in some embodiments of the present application;
FIG. 3 is a simplified schematic diagram of a separator unwinding mechanism connected to a stacking device provided in some embodiments of the present application;
FIG. 4 is a schematic structural diagram of a stacking platform connected to a pressing mechanism provided in some embodiments of the present application;
FIG. 5 is an enlarged view of position A in FIG. 2;
FIG. 6 is a schematic diagram of a first electrode plate placed on a stacking platform provided in some embodiments of the present application;
FIG. 7 is a schematic diagram of a separator covering a first electrode plate provided in some embodiments of the present application;
FIG. 8 is a schematic diagram of a second electrode plate placed on a stacking platform provided in some embodiments of the present application;
FIG. 9 is a schematic diagram of a separator covering a second electrode plate provided in some embodiments of the present application;
FIG. 10 is a schematic diagram of a second first electrode plate placed on a stacking platform provided in some embodiments of the present application;
FIG. 11 is a schematic structural diagram of a first transfer mechanism provided in some embodiments of the present application;
FIG. 12 is a schematic block diagram illustrating a first detection unit connected to a first pickup unit provided in some embodiments of the present application;
FIG. 13 is a schematic structural diagram of a first adhesive applying mechanism provided in some embodiments of the present application;
FIG. 14 is a schematic structural diagram of a hot pressing device provided in some embodiments of the present application;
FIG. 15 is a schematic structural diagram of a first tab providing mechanism provided in some embodiments of the present application;
FIG. 16 is a schematic structural diagram of a first welding mechanism provided in some embodiments of the present application;
FIG. 17 is a schematic structural diagram of a conveying mechanism provided in some embodiments of the present application;
FIG. 18 is a schematic structural diagram of a positioning clamp provided in some embodiments of the present application.

Reference numerals: 10-Stacking system; 11-First transfer mechanism; 111-Fourth driving member; 112-Fifth driving member; 113-First pickup unit; 114-First detection unit; 115-First detection mechanism; 116-Third dust removal mechanism; 12-Second transfer mechanism; 13-Stacking device; 131-Stacking platform; 1311-Adsorption hole; 132-First driving mechanism; 133-Pressing mechanism; 1331-Pressing member; 13311-Pressing portion; 1332-Second driving mechanism; 13321-First driving member; 13322-Second driving member; 134-First smoothing member; 135-Flipping mechanism; 136-Second smoothing mechanism; 1361-Third driving mechanism; 1362-Second smoothing member; 137-Third transfer mechanism; 138-First stacking position; 1381-First sensor; 139-Second stacking position; 1391-Second sensor; 14-Separator unwinding mechanism; 141-Output portion; 142-First unwinding roller; 143-Bypass roller; 144-Frame; 145-Cutter unit; 146-Active roller; 15-First adhesive applying mechanism; 151-Adhesive unwinding mechanism; 152-Adhesive applying component; 1521-Adsorption member; 1522-Fourth driving mechanism; 153-Pulling mechanism; 1531-First clamping unit; 1532-Second clamping unit; 154-Cutter mechanism; 16-Hot pressing device; 161-Hot pressing workbench; 162-Hot pressing member; 163-Fifth driving mechanism; 17-Tab welding mechanism; 171-First tab providing mechanism; 1711-Material strip unwinding mechanism; 1712-Fourth transfer mechanism; 17121-Pickup member; 17122-Sixth driving member; 1713-Strip pulling mechanism; 17131-Third clamping unit; 17132-Fourth clamping unit; 1714-Cutting mechanism; 173-First welding mechanism; 1731-First welding head; 1732-First dust removal mechanism; 17321-Dust removal member; 17322-Sixth driving mechanism; 1733-Seventh driving member; 175-Conveying mechanism; 1751-Turntable; 1752-Positioning clamp; 17521-Supporting platform; 17522-First clamping jaw; 17523-Second clamping jaw; 17524-Third clamping jaw; 20-Battery cell; 21-First electrode plate; 22-Second electrode plate; 23-Separator; 24-First tab; 25-Second tab.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association that describes the associated object, indicating that there can be three kinds of relationships, for example, A and/or B may denote the following three situations: A exists alone, A and B exist simultaneously, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "plurality of" refers to more than two (including two).

In the present application, a battery cell may include a secondary lithium-ion battery cell, a primary lithium-ion battery cell, a lithium-sulfur battery cell, a sodium lithium-ion battery cell, a sodium-ion battery cell or a magnesium-ion battery cell, etc., which is not limited in the embodiment of the present application. The battery cell may be in a cylindrical shape, a flat shape, a cuboid shape or another shape, which is not limited in the embodiments of the present application either. The battery cells are generally classified into three types depending on the way of encapsulation: cylindrical battery cells, square battery cells and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery generally comprises a box body for packaging one or more battery cells. The box body can prevent liquid or other foreign matters from affecting charging or discharging of the battery cells to some extent.

The battery cell comprises an electrode assembly and an electrolytic solution, and the electrode assembly is composed of a positive electrode plate, a negative electrode plate and a separator. The operation of the battery cell mainly relies on the movement of metal ions between the positive electrode plate and the negative electrode plate. The positive electrode plate comprises a positive electrode current collector and a positive electrode active material layer, a surface of the positive electrode current collector is coated with the positive electrode active material layer, the positive electrode current collector not coated with the positive electrode active material layer protrudes from the positive electrode current collector already coated with the positive electrode active material layer, and the positive electrode current collector not coated with the positive electrode active material layer is used as a positive sub-tab. Taking a lithium-ion battery as an example, the material of the positive electrode current collector may be aluminum, and the positive electrode active material may be lithium cobalt oxide, lithium iron phosphate, ternary lithium, lithium manganate, etc. The negative electrode plate comprises a negative electrode current collector and a negative electrode active material layer, a surface of the negative electrode current collector is coated with the negative electrode active material layer, the negative electrode current collector not coated with the negative electrode active material layer protrudes from the negative electrode current collector already coated with the negative electrode active material layer, and the negative electrode current collector not coated with the negative electrode active material layer is used as a negative sub-tab. The material of the negative electrode current collector may be copper, and the negative electrode active material may be carbon, silicon, etc. In order to ensure that no fusing occurs when a large current passes, there are a plurality of positive sub-tabs which are stacked together, and there are a plurality of negative sub-tabs which are stacked together. The material of the separator may be, for example, polypropylene (PP) or polyethylene (PE).

At present, from the development of the market situation, the application of batteries is becoming increasingly more extensive. Batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of batteries, the market demand thereof is also constantly expanding.

The electrode assembly is a component of a battery cell where an electrochemical reaction occurs. The electrode assembly includes a wound type electrode assembly and a stacked type electrode assembly. Currently, the production efficiency of stacked type electrode assemblies is low.

In the prior art, stacked type electrode assemblies are generally produced by manual stacking. The quality of stacked type electrode assemblies manufactured by this production method depends largely on the proficiency of the workers. Not only can the stacking quality of the stacked type electrode assemblies not be guaranteed, but its production efficiency is also low.

In view of this, an embodiment of the present application provides a stacking system, and the stacking system comprises a first transfer mechanism, a second transfer mechanism, a separator unwinding mechanism, and a stacking device. The first transfer mechanism is used for transferring a first electrode plate. The second transfer mechanism is used for transferring a second electrode plate, and the polarity of the second electrode plate is opposite to that of the first electrode plate. The separator unwinding mechanism is used for unwinding a separator. The stacking device is used for receiving the first electrode plate, the separator and the second electrode plate, and for stacking the first electrode plate, the separator and the second electrode plate to form a battery cell.

The first transfer mechanism, the second transfer mechanism and the separator unwinding mechanism of the stacking system can respectively provide the first electrode plate, the second electrode plate and the separator to the stacking device, the stacking device can stack the first electrode plate, the separator and the second electrode plate to form a battery cell, thereby realizing automatic stacking, which is conducive to improving stacking quality and production efficiency.

The technical solution described in the embodiments of the present application is applicable to the manufacture of stacked type electrode assemblies, and the use of this stacking system is conducive to improving stacking quality and production efficiency.

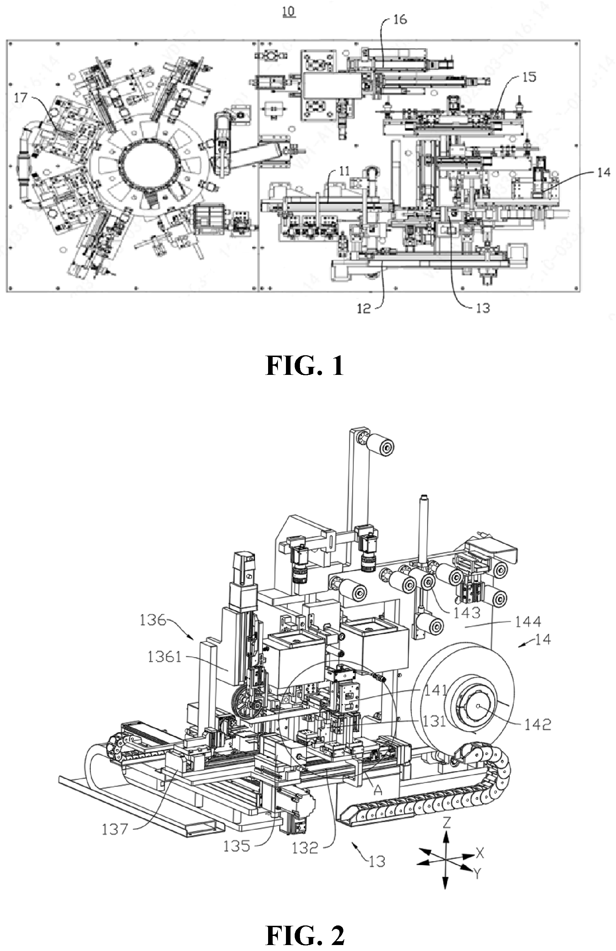

Referring to FIG. 1, FIG. 1 is a schematic structural diagram of a stacking system 10 provided in some embodiments of the present application. An embodiment of the present application provides a stacking system 10, and the stacking system 10 comprises a first transfer mechanism 11, a second transfer mechanism 12, a separator unwinding mechanism 14, and a stacking device 13. The first transfer mechanism 11 is used for transferring a first electrode plate 21. The second transfer mechanism 12 is used for transferring a second electrode plate 22, and the polarity of the second electrode plate 22 is opposite to that of the first electrode plate 21. The separator unwinding mechanism 14 is used for unwinding the separator 23. The stacking device 13 is used for receiving the first electrode plate 21, the separator 23 and the second electrode plate 22, and for stacking the first electrode plate 21, the separator 23 and the second electrode plate 22 to form a battery cell 20.

The first transfer mechanism 11 is a mechanism for transferring the first electrode plate 21 to the stacking device 13. The first transfer mechanism 11 may comprise a two-axis manipulator, a three-axis manipulator, a four-axis manipulator, etc.

The second transfer mechanism 12 is a mechanism for transferring the second electrode plate 22 to the stacking device 13. The second transfer mechanism 12 may comprise a two-axis manipulator, a three-axis manipulator, a four-axis manipulator, etc.

The first electrode plate 21 and the second electrode plate 22 have opposite polarities. In other words, one of the first electrode plate 21 and the second electrode plate 22 is a positive electrode plate, and the other is a negative electrode plate. When the first electrode plate 21 is a positive electrode plate, the second electrode plate 22 is a negative electrode plate. When the first electrode plate 21 is a negative electrode plate, the second electrode plate 22 is a positive electrode plate.

The separator unwinding mechanism 14 is a mechanism for unwinding the separator 23 toward the stacking device 13. The material of the separator 23 may be, for example, polypropylene (PP) or polyethylene (PE).

The stacking device 13 can receive the first electrode plate 21 provided by the first transfer mechanism 11, the separator 23 unwound by the separator unwinding mechanism 14 and the second electrode plate 22 transferred by the second transfer mechanism 12, and stack the first electrode plate 21, the separator 23 and the second electrode plate 22 together to form a battery cell 20.

The first transfer mechanism 11, the second transfer mechanism 12 and the separator unwinding mechanism 14 of the stacking system 10 can respectively provide the first electrode plate 21, the second electrode plate 22 and the separator 23 to the stacking device 13, the stacking device 13 can stack the first electrode plate 21, the separator 23 and the second electrode plate 22 to form a battery cell 20, thereby realizing automatic stacking, which is conducive to improving stacking quality and production efficiency.

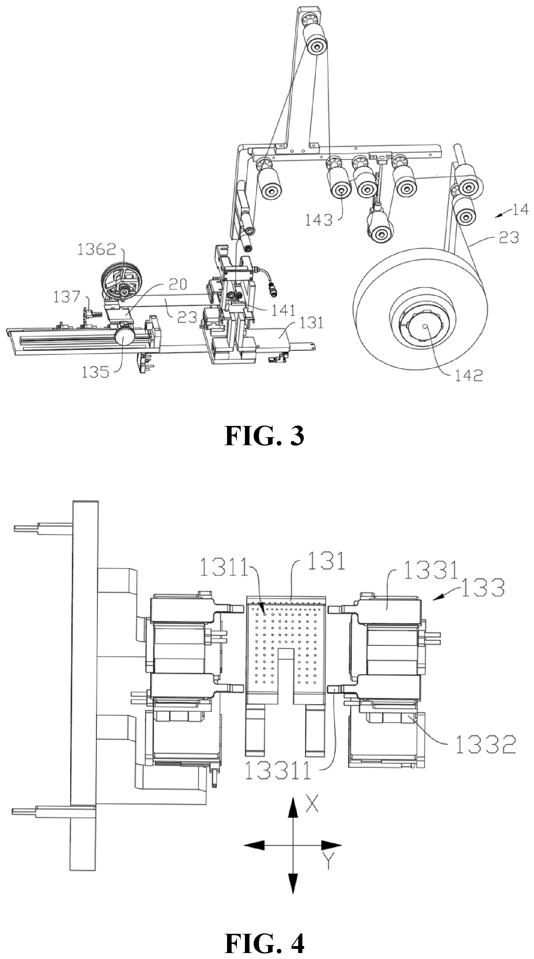

Referring to FIGS. 1, 2, and 3, FIG. 2 is a schematic structural diagram of a separator unwinding mechanism 14 connected to a stacking device 13 provided in some embodiments of the present application. FIG. 3 is a simplified schematic diagram of a separator unwinding mechanism 14 connected to a stacking device 13 provided in some embodiments of the present application. In some embodiments, the separator unwinding mechanism 14 has an output portion 141 for outputting the separator 23. The stacking device 13 comprises a stacking platform 131 and a first driving mechanism 132. The stacking platform 131 has a first stacking position 138 and a second stacking position 139, and along a first direction, the first stacking position 138 and the second stacking position 139 are respectively located on two sides of the output portion 141. The stacking platform 131 is used for receiving the first electrode plate 21 at the first stacking position 138 and for receiving the second electrode plate 22 at the second stacking position 139. The first driving mechanism 132 is used for driving the stacking platform 131 to move along the first direction, so that the stacking platform 131 switches between the first stacking position 138 and the second stacking position 139.

The output portion 141 is a component of the separator unwinding mechanism 14 that outputs the separator 23. The separator unwinding mechanism 14 may comprise a first unwinding roller 142, a plurality of bypass rollers 143 and an output portion 141, the first unwinding roller 142 is used to mount a roll of the separator 23, and the separator 23 passes over the plurality of rollers 143 and is output from the output portion 141. In some embodiments, the first unwinding roller 142 can be actively rotated as driven by the driving mechanism, thereby achieving active unwinding. In other embodiments, the separator unwinding mechanism 14 further comprises an active roller 146, and the active roller 146 acts on the separator 23 to drive the separator 23 to unwind.

Optionally, the output portion 141 comprises two conveying rollers arranged side by side along the first direction, and a gap is formed between the two conveying rollers for the separator 23 to pass through.

The first direction is the movement direction of the stacking platform 131. Referring to FIG. 2, the first direction may be direction X shown in the figure.

The stacking platform 131 is a platform structure for receiving and supporting the first electrode plate 21, the separator 23 and the second electrode plate 22. The first electrode plate 21, the separator 23 and the second electrode plate 22 are gradually stacked on the stacking platform 131. The stacking platform 131 has a first stacking position 138 and a second stacking position 139, and when the stacking platform 131 is located at the first stacking position 138, the stacking platform 131 is located at one side of the output portion 141 along the first direction. When the stacking platform 131 is located at the second stacking position 139, the stacking platform 131 is located at the other side of the output portion 141 along the first direction. In other words, the output portion 141 is located between the first stacking position 138 and the second stacking position 139 along the first direction. The stacking platform 131 receives the first electrode plate 21 at the first stacking position 138 and receives the second electrode plate 22 at the second stacking position 139.

In some embodiments, in order to facilitate detecting whether the stacking platform 131 reaches the first stacking position 138 and the second stacking position 139, a first sensor 1381 is provided at the first stacking position 138 and a second sensor 1391 is provided at the second stacking position 139. The first drive mechanism 132 responds to the first sensor 1381 and the second sensor 1391. The first sensor 1381 and the second sensor 1391 may be in-position sensors, industrial cameras, and the like. Along the first direction, the first sensor 1381 and the second sensor 1391 are respectively located on two sides of the output portion 141.

Optionally, adsorption holes 1311 are provided on the support surface of the stacking platform 131, and the adsorption holes 1311 are connected to a negative pressure mechanism, the negative pressure mechanism is used to create a negative pressure by pumping for the adsorption holes 1311, thereby adsorbing the first electrode plate 21, the separator 23 and the second electrode plate 22 on the stacking platform 131.

The first driving mechanism 132 is connected to the stacking platform 131, the first driving mechanism 132 is used for driving the stacking platform 131 to move along the first direction, so that the stacking platform 131 switches between the first stacking position 138 and the second stacking position 139. The first driving mechanism 132 may comprise a linear driving member, an output end of which is connected to the stacking platform 131, and the linear driving member drives the stacking platform 131 to move along the first direction. The linear driving member can be a linear air cylinder, a linear electric cylinder, a linear oil cylinder, etc. The first driving mechanism 132 may also comprise a rotating driving member and a transmission mechanism. The rotating driving member is connected to the stacking platform 131 through the transmission mechanism. The rotating driving member outputs rotational motion, and the transmission mechanism converts the rotational motion output by the rotating driving member into linear motion of the stacking platform 131. The rotating driving member can be a motor, an internal combustion engine, etc. The transmission mechanism can be a slider-crank mechanism, a lead screw nut mechanism, etc.

The first driving mechanism 132 can drive the stacking platform 131 to switch between the first stacking position 138 and the second stacking position 139. When the stacking platform 131 is located at the first stacking position 138, the stacking platform 131 is located at one side of the output portion 141 along the first direction. When the stacking platform 131 is located at the second stacking position 139, the stacking platform 131 is located at the other side of the output portion 141 along the first direction. The stacking platform 131 can receive the first electrode plate 21 at the first stacking position 138, one end of the separator 23 can be arranged on the stacking platform 131, and during the switching of the stacking platform 131 from the first position to the second position, since the first stacking position 138 and the second stacking position 139 are respectively located on two sides of the output portion 141, the separator 23 will gradually cover the first electrode plate 21. The stacking platform 131 reaches the second position, receives the second electrode plate 22, and then switches from the second position to the first position. During the switching of the stacking platform 131 from the second position to the first position, since the first stacking position 138 and the second stacking position 139 are respectively located on two sides of the output portion 141, the separator 23 will gradually cover the second electrode plate 22, the stacking platform 131 reaches the first position and can again receive the first electrode plate 21. As the stacking platform 131 switches back and forth between the first position and the second position, the first electrode plate 21, the separator 23 and the second electrode plate 22 are gradually stacked to form a battery cell 20.

Referring to FIGS. 2, 3, and 4, FIG. 4 is a schematic structural diagram of a stacking platform 131 connected to a pressing mechanism 133 provided in some embodiments of the present application. In some embodiments, the stacking device 13 comprises a pressing mechanism 133, and the pressing mechanism 133 is provided on the stacking platform 131. The pressing mechanism 133 is used for pressing the first electrode plate 21, the separator 23 or the second electrode plate 22 against the stacking platform 131.

The pressing mechanism 133 is a mechanism for pressing the first electrode plate 21, the separator 23 or the second electrode plate 22 against the stacking platform 131. The pressing mechanism 133 can press the uppermost one of the first electrode plate 21, the separator 23 and the second electrode plate 22, thereby pressing the lower first electrode plate 21, the separator 23 and the second electrode plate 22. For example, when the stacking platform 131 is at the first stacking position 138, the pressing mechanism 133 may contact the topmost first electrode plate 21, thereby pressing the stacked first electrode plate 21, separator 23, and second electrode plate 22. For another example, when the stacking platform 131 is at the second stacking position 139, the pressing mechanism 133 may contact the topmost second electrode plate 22, thereby pressing the stacked first electrode plate 21, separator 23, and second electrode plate 22.

By providing the pressing mechanism 133, the first electrode plate 21, the separator 23 or the second electrode plate 22 is pressed against the stacking platform 131 during the switching of the stacking platform 131 between the first position and the second position, thereby reducing the risk of the first electrode plate 21, the separator 23 or the second electrode plate 22 detaching from the stacking platform 131, which is conducive to improving the reliability of the stacking device 13, improving stacking quality, reducing the risk of shutdown, and ensuring production efficiency to a certain extent.

Referring to FIGS. 2, 3 and 4, in some embodiments, the pressing mechanism 133 comprises a pressing member 1331 and a second driving mechanism 1332, and the pressing member 1331 is used for pressing the first electrode plate 21, the separator 23 or the second electrode plate 22 against the stacking platform 131. The second driving mechanism 1332 is connected to the pressing member 1331, and the second driving mechanism 1332 is used for driving the pressing member 1331 to move along a second direction and a third direction. The second direction is the stacking direction of the first electrode plate 21, the separator 23 and the second electrode plate 22, the third direction intersects with the second direction, and the first direction intersects with the plane where the second direction and the third direction are located.

The second direction is the stacking direction of the first electrode plate 21, the separator 23 and the second electrode plate 22. The third direction intersects with the second direction. Referring to FIGS. 2 and 4, the second direction may be direction Z shown in the figures, and the third direction may be direction Y shown in the figures. In this case, the first direction, the second direction, and the third direction are perpendicular to each other.

The pressing member 1331 is a component used for contacting the first electrode plate 21, the separator 23 or the second electrode plate 22 to press the first electrode plate 21, the separator 23 or the second electrode plate 22 against the stacking platform 131. When the pressing member 1331 is working, the pressing member 1331 contacts the first electrode plate 21, the separator 23 or the second electrode plate 22, and along the second direction, the projection of the pressing member 1331 on the stacking platform 131 at least partially overlaps with the stacking platform 131. When the pressing member 1331 is not working, the pressing member 1331 avoids the first electrode plate 21, the separator 23 and the second electrode plate 22, so as to facilitate the continued stacking of the first electrode plate 21 or the second electrode plate 22.

The second driving mechanism 1332 is connected to the pressing member 1331, and the second driving mechanism 1332 can drive the pressing member 1331 to move along the second direction and the third direction, so as to change the pressing position of the pressing member 1331.

Referring to FIGS. 2, 3, 4 and 5, FIG. 5 is an enlarged view of position A in FIG. 2. In some embodiments, the second driving mechanism 1332 comprises a first driving member 13321 and a second driving member 13322, the first driving member 13321 is connected to the stacking platform 131, and the second driving member 13322 is connected to the first driving member 13321 and the pressing member 1331. The first driving member 13321 is used for driving the second driving member 13322 and the pressing member 1331 to move along the third direction, and the second driving member 13322 is used for driving the pressing member 1331 to move along the second direction. The first driving member 13321 and the second driving member 13322 can be a linear electric cylinder, a linear air cylinder, a linear oil cylinder, etc.

The second driving mechanism 1332 is provided to drive the pressing member 1331 to move along the second direction and the third direction, thereby facilitating the change of the position of the pressing member 1331 and facilitating the pressing member 1331 to press the first electrode plate 21, the separator 23 or the second electrode plate 22. When the stacking platform 131 is in the first position or the second position, the second driving mechanism 1332 can drive the pressing member 1331 to move, so that the pressing member 1331 presses the uppermost one of the first electrode plate 21, the separator 23 and the second electrode plate 22.

Referring to FIGS. 2, 3, 4 and 5, in some embodiments, along the third direction, both sides of the stacking platform 131 are provided with the pressing member 1331.

The stacking mechanism comprises a plurality of pressing mechanisms 133, some of the plurality of pressing mechanisms 133 are located on one side of the stacking platform 131 along the third direction, while the others are located on the other side of the stacking platform 131 along the third direction. In this way, both sides of the stacking platform 131 are provided with the pressing member 1331 along the third direction.

By arranging the pressing members 1331 on both sides of the stacking platform 131 along the third direction, it helps to enhance the pressing effect on the first electrode plate 21, the separator 23 or the second electrode plate 22, thereby reducing the risk of the first electrode plate 21, the separator 23 or the second electrode plate 22 detaching from the stacking platform 131, which is conducive to improving the reliability of the stacking device 13, improving stacking quality, reducing the risk of shutdown, and ensuring production efficiency to a certain extent.

Referring to FIGS. 2, 3, 4 and 5, in some embodiments, the pressing member 1331 comprises a pressing portion 13311, and the pressing portion 13311 is used for contacting the first electrode plate 21, the separator 23 or the second electrode plate 22. The pressing portion 13311 is in a sheet shape.

The pressing portion 13311 is the portion of the pressing member 1331 that contacts the first electrode plate 21, the separator 23 or the second electrode plate 22. The pressing portion 13311 is in a sheet shape. The thickness of the pressing portion 13311 is much smaller than its length and width. For example, the thickness of the pressing portion 13311 is less than 20% of its width, and the thickness of the pressing portion 13311 is less than 20% of its length.

By providing the pressing portion 13311 in a sheet shape, the thickness of the pressing portion 13311 along the second direction is smaller. In this way, when the stacking platform 131 switches between the first position and the second position, the redundancy of the separator 23 caused by the separator 23 covering the pressing portion 13311 is smaller. In addition, the pressing portion 13311 is in a sheet shape, so that the contact area between the pressing portion 13311 and the first electrode plate 21, the separator 23 or the second electrode plate 22 is larger, which is not easy to cause stress concentration on the first electrode plate 21, the separator 23 or the second electrode plate 22, thereby helping to improve stacking quality.

Referring to FIGS. 2, 3, 4 and 5, in some embodiments, the stacking device 13 comprises a first smoothing mechanism for smoothing the separator 23 when the stacking platform 131 switches between the first stacking position 138 and the second stacking position 139.

The first smoothing mechanism is a mechanism for smoothing the separator 23. When the stacking platform 131 switches between the first stacking position 138 and the second stacking position 139, the first smoothing mechanism can act on the separator 23 to smooth the separator 23.

The first smoothing mechanism is provided to smooth the separator 23 when the stacking platform 131 switches between the first stacking position 138 and the second stacking position 139, thereby reducing the risk of wrinkling of the separator 23 and making the separator 23 stacked with the first electrode plate 21 and the second electrode plate 22 smoother, thereby improving stacking quality.

Referring to FIGS. 2, 3, 4 and 5, in some embodiments, the stacking device 13 comprises a frame 144, the first smoothing mechanism comprises a first smoothing member 134, and the first smoothing member 134 is used for smoothing the separator 23. The first smoothing member 134 is connected to the frame 144, and the stacking platform 131 is movably disposed on the frame 144 along the first direction.

The first smoothing member 134 is a component in the first smoothing mechanism that directly contacts the separator 23 and smooths the separator 23. The first smoothing member 134 may be fixedly connected to the frame 144, for example, the first smoothing member 134 may be welded or bonded to the frame 144. The first smoothing member 134 may also be detachably connected to the frame 144, for example, the first smoothing member 134 is connected to the frame 144 by bolts. The first smoothing member 134 may also be connected to the frame 144 in a position-adjustable manner. For example, the first smoothing member 134 may be slidably connected to the frame 144.

Optionally, in some embodiments, the stacking device 13 comprises a first clamping plate and a second clamping plate, the first clamping plate and the second clamping plate are detachably connected, and the first clamping plate is connected to the frame 144. The first smoothing member 134 is disposed between the first clamping plate and the second clamping plate. When the first clamping plate and the second clamping plate are loosened, the relative position of the first smoothing member 134 and the frame 144 can be adjusted. When the first clamping plate and the second clamping plate are clamped together, the relative position of the first smoothing member 134 and the frame 144 is restricted.

The stacking platform 131 is movably provided on the frame 144 along the first direction, and when the stacking platform 131 moves from the first stacking position 138 to the second stacking position 139, or from the second stacking position 139 to the first stacking position 138, the first smoothing member 134 can smooth the separator 23. The risk of wrinkling of the separator 23 is reduced, so that the separator 23 stacked with the first electrode plate 21 and the second electrode plate 22 is relatively smooth, thereby improving stacking quality.

In some embodiments, the first smoothing member 134 is made of a flexible material.

Flexible materials refer to materials that have a certain degree of softness and flexibility compared to rigid materials and are easy to deform when subjected to external forces. The flexible material may be polyvinyl alcohol, polyester, polyimide, polyethylene naphthalate, etc.

The first smoothing member 134 can be fixed to the frame 144, and in this case, the first smoothing member 134 is made of a flexible material. In this way, on the one hand, as the number of stacked layers increases, the thickness of stacking also increases, and the first smoothing member 134 can be deformed to adapt to the increase in the number of stacked layers. On the other hand, the first smoothing member 134 made of a flexible material is less likely to cause damage to the separator 23, which is conducive to improving stacking quality.

Referring to FIGS. 2, 3, 4 and 5, in some embodiments, the output portion 141 is connected to the frame 144.

The output portion 141 may be fixedly connected to the frame 144, for example, the output portion 141 may be welded or bonded to the frame 144. The output portion 141 may also be detachably connected to the frame 144, for example, the output portion 141 is connected to the frame 144 by bolts. The output portion 141 may also be connected to the frame 144 in a position-adjustable manner. For example, the output portion 141 may be slidably connected to the frame 144.

The output portion 141 is connected to the frame 144 to determine the position of the output portion 141, so that the output portion 141 can be located between the first stacking position 138 and the second stacking position 139, so as to improve the accuracy of subsequent stacking.

Referring to FIGS. 2, 3, 4 and 5, in some embodiments, the stacking device 13 comprises a flipping mechanism 135, the flipping mechanism 135 and the stacking platform 131 are arranged along a first direction, and the stacking platform 131 moves along the first direction to transport the battery cell 20 to the flipping mechanism 135. The flipping mechanism 135 is used for driving the battery cell 20 to flip so that the separator 23 covers the outside of the battery cell 20.

The flipping mechanism 135 is a structure for driving the battery cell 20 to flip. The battery cell 20 is driven to flip by the flipping mechanism 135, so that the insulating film can be wound around or cover the outside of the battery cell 20. The flipping mechanism 135 and the stacking platform 131 are arranged along the first direction, so that the stacking platform 131 can move along the first direction to transport the battery cell 20 to the flipping mechanism 135.

Optionally, the flipping mechanism 135 comprises a clamping portion and a driving unit, the clamping portion is used for clamping the battery cell 20 supplied by the stacking platform 131, the clamping portion is connected to the driving unit, and the driving unit is used for driving the clamping portion to rotate to drive the battery cell 20 to rotate.

In some embodiments, the rotation axis of the battery cell 20 is parallel to the third direction.

After the stacking platform 131 completes stacking, it can move along the first direction to supply the battery cell 20 to the flipping mechanism 135, and the flipping mechanism 135 receives the battery cell 20 and drives the battery cell 20 to flip, so that the separator 23 covers the outside of the battery cell 20. On the one hand, the separator 23 can protect the battery cell 20. On the other hand, the separator 23 insulates the battery cell 20 from other components.

Referring to FIGS. 2, 3, 4 and 5, in some embodiments, the stacking device 13 comprises a second smoothing mechanism 136, the second smoothing mechanism 136 is used for smoothing at least a portion of the separator 23 located between the flipping mechanism 135 and the output portion 141 along the extension direction of the separator 23.

The second smoothing mechanism 136 is a mechanism for smoothing the separator 23 between the flipping mechanism 135 and the output portion 141. The second smoothing mechanism 136 smooths the separator 23 between the flipping mechanism 135 and the output portion 141, so that this portion of the separator 23 is less likely to wrinkle when covering the outside of the battery cell 20.

The second smoothing mechanism 136 is provided to smooth at least a portion of the separator 23 between the flipping mechanism 135 and the output portion 141. In this way, the insulating film covering the outside of the battery cell 20 is relatively smooth and less prone to wrinkling, thereby improving stacking quality.

Referring to FIGS. 2, 3, 4 and 5, in some embodiments, the second smoothing mechanism 136 comprises a third driving mechanism 1361 and a second smoothing member 1362, and the second smoothing member 1362 is connected to the third driving mechanism 1361. The third driving mechanism 1361 is used for driving the second smoothing member 1362 to move along the extension direction of the separator 23, so that the second smoothing member 1362 smooths the separator 23.

The second smoothing member 1362 is a component in the second smoothing mechanism 136 that directly contacts the separator 23 and smooths the separator 23. The second smoothing member 1362 is connected to the third driving mechanism 1361, so as to be driven by the third driving mechanism 1361 to move along the extension direction of the separator 23, thereby smoothing the separator 23.

In some embodiments, the flipping mechanism 135 and the stacking platform 131 are arranged in the first direction, and the separator 23 located between the flipping mechanism 135 and the output portion 141 also extends along the first direction. That is, the third driving mechanism 1361 can drive the second smoothing member 1362 to move along the first direction, thereby smoothing the separator 23 located between the flipping mechanism 135 and the output portion 141.

By providing the third driving mechanism 1361, the second smoothing member 1362 is driven to move along the extension direction of the separator 23, thereby smoothing the separator 23. The structure is relatively simple and the smoothing effect is good.

Referring to FIGS. 2, 3, 4 and 5, in some embodiments, the second smoothing member 1362 is in a wheel shape, and the third driving mechanism 1361 is further used for driving the second smoothing member 1362 to rotate.

The second smoothing member 1362 is in a wheel shape, and the wheel circumference of the second smoothing member 1362 is used for contacting the separator 23 to smooth the separator 23.

The third driving mechanism 1361 may comprise a plurality of driving members, wherein some driving members are used to realize the movement of the second smoothing member 1362, and some other driving members are used to realize the rotation of the second smoothing member 1362. For example, the third driving mechanism 1361 comprises a first linear air cylinder, a second linear air cylinder, a rack and a gear, wherein the second linear air cylinder is connected to the first linear air cylinder, the rack is connected to the output end of the second linear air cylinder, the second smoothing member 1362 is rotatably connected to the first linear air cylinder, the gear is connected to the second smoothing member 1362, and the rack is engaged with the gear. When the first linear air cylinder operates, it can drive the second linear air cylinder and the second smoothing member 1362 to move as a whole, thereby causing the second smoothing member 1362 to move along the extension direction of the separator 23. When the second linear air cylinder operates, it drives the rack to move, and the rack drives the gear to rotate, thereby driving the second smoothing member 1362 to rotate.

The second smoothing member 1362 can move along the extension direction of the separator 23 while rotating relative to the separator 23. In this way, rolling friction is formed between the second smoothing member 1362 and the separator 23, which reduces the friction force on the separator 23 and is less likely to cause damage to the separator 23, thereby helping to improve stacking quality.

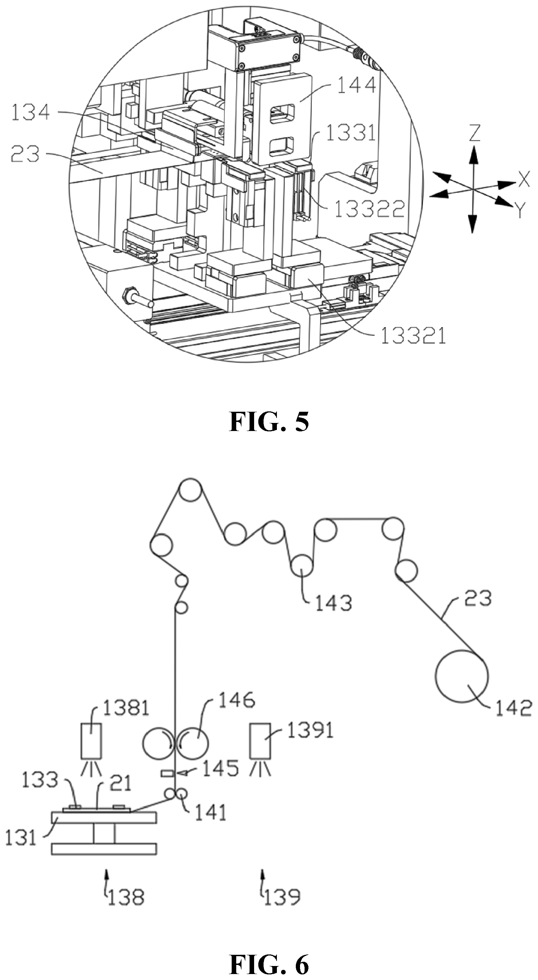

Referring to FIG. 6, FIG. 6 is a schematic diagram of a first electrode plate 21 placed on a stacking platform 131 provided in some embodiments of the present application. In some embodiments, the separator unwinding mechanism 14 comprises a cutter unit 145, and the cutter unit 145 is used for cutting off the separator 23.

The cutter unit 145 may comprise a cutter and a supporting member opposite to the cutter, and the separator 23 passes through between the cutter and the supporting member. When the separator 23 needs to be cut off, the cutter moves toward the supporting member to cut off the separator 23.

By providing the cutter unit 145, after the first electrode plate 21, the separator 23 and the second electrode plate 22 are stacked, the separator 23 is cut off to prepare for the stacking of the next battery cell 20.

Referring to FIG. 6, when the stacking platform 131 is in the first stacking position 138, the first electrode plate 21 can be placed on the stacking platform 131, one end of the separator 23 can be placed under the first electrode plate 21, and the first electrode plate 21 can be pressed against the stacking platform 131 by the pressing mechanism 133.

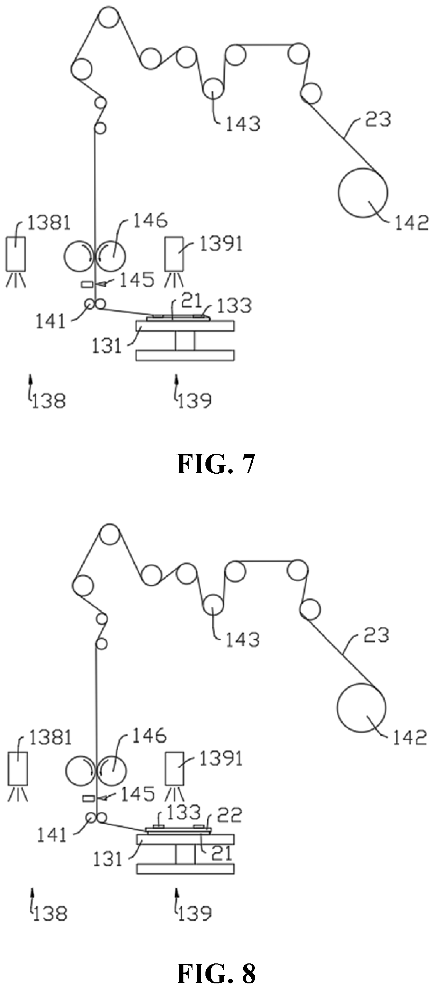

Referring to FIG. 7, FIG. 7 is a schematic diagram of a separator 23 covering a first electrode plate 21 provided in some embodiments of the present application. The first driving mechanism 132 drives the stacking platform 131 to move from the first stacking position 138 to the second stacking position 139, and during this process, the stacking platform 131 moves from one side of the output portion 141 to the other side of the output portion 141, and the separator 23 gradually covers the first electrode plate 21.

Referring to FIG. 8, FIG. 8 is a schematic diagram of a second electrode plate 22 placed on a stacking platform 131 provided in some embodiments of the present application. When the stacking platform 131 reaches the second stacking position 139, the second driving mechanism 1332 drives the pressing member 1331 to operate to release the first electrode plate 21 so that the second electrode plate 22 can be placed on the first electrode plate 21. In this case, there is a layer of separator 23 between the second electrode plate 22 and the first electrode plate 21. The second driving mechanism 1332 operates again to press the second electrode plate 22 against the stacking platform 131.

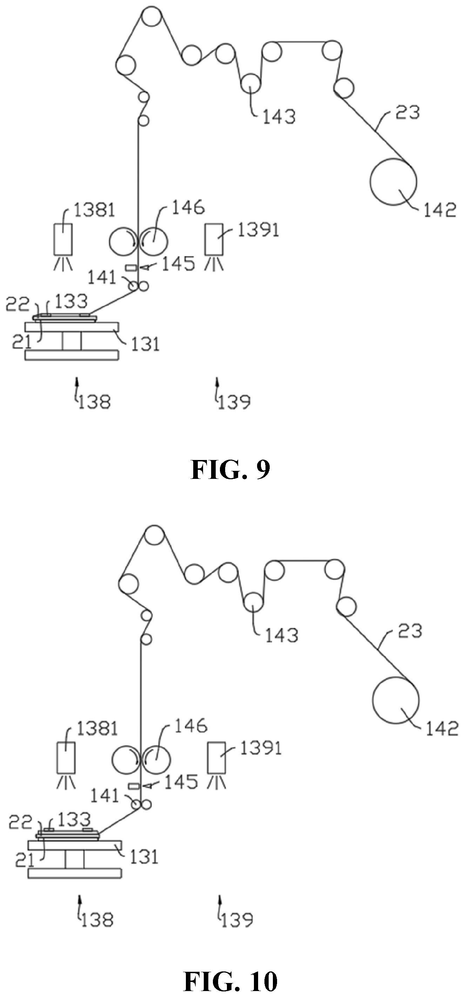

Referring to FIG. 9, FIG. 9 is a schematic diagram of a separator 23 covering a second electrode plate 22 provided in some embodiments of the present application. The second driving mechanism 1332 drives the stacking platform 131 to move from the second stacking position 139 to the first stacking position 138, and during this process, the stacking platform 131 moves from one side of the output portion 141 to the other side of the output portion 141, and the separator 23 gradually covers the second electrode plate 22.

Referring to FIG. 10, FIG. 10 is a schematic diagram of a second first electrode plate 21 placed on a stacking platform 131 provided in some embodiments of the present application. When the stacking platform 131 returns back to the first stacking position 138, the second driving mechanism 1332 drives the pressing member 1331 to operate to release the second electrode plate 22 so that the new first electrode plate 21 can be placed on the second electrode plate 22. In this case, there is a layer of separator 23 between the new first electrode plate 21 and the second electrode plate 22. The second driving mechanism 1332 operates again to press the new first electrode plate 21 against the stacking platform 131.

The above process is repeated to complete the stacking.

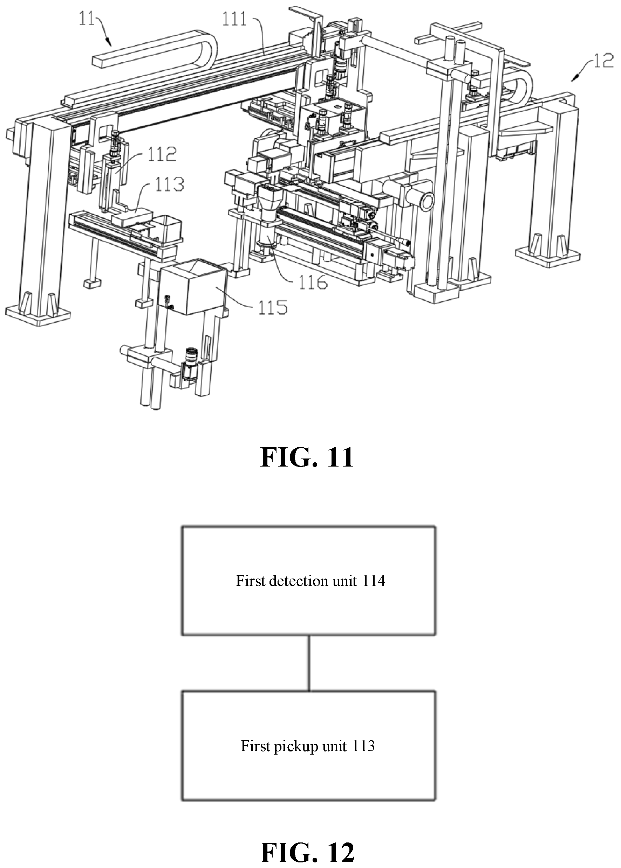

Referring to FIGS. 11 and 12, FIG. 11 is a schematic structural diagram of a first transfer mechanism 11 provided in some embodiments of the present application. FIG. 12 is a schematic block diagram illustrating a first detection unit 114 connected to a first pickup unit 113 provided in some embodiments of the present application; In some embodiments, the first transfer mechanism 11 comprises a first pickup unit 113 and a first detection unit 114. The first pickup unit 113 is used for picking up the first electrode plates 21, the first detection unit 114 is used for detecting the number of the first electrode plates 21 picked up by the first pickup unit 113 in a single time, and the first pickup unit 113 responds to the first detection unit 114. And/or the second transfer mechanism 12 comprises a second pickup unit and a second detection unit. The second pickup unit is used for picking up the second electrode plates 22, the second detection unit is used for detecting the number of the second electrode plates 22 picked up by the second pickup unit in a single time, and the second pickup unit responds to the second detection unit.

The first pickup unit 113 is a portion of the first transfer mechanism 11 for picking up the first electrode plate 21. In some embodiments, the first pickup unit 113 comprises a first pickup portion, the first pickup portion may comprise a negative pressure adsorption mechanism for picking up the first electrode plate 21 by negative pressure adsorption. In other embodiments, the first pickup portion comprises a clamping jaw for picking up the first electrode plate 21 by clamping.

In some embodiments, the first pickup unit 113 further comprises a fourth driving member 111 and a fifth driving member 112, wherein the fifth driving member 112 connects the fourth driving member 111 and the first pickup portion, the fourth driving member 111 is used for driving the fifth driving member 112 and the first pickup portion to move as a whole in the first direction, and the fifth driving member 112 is used for driving the first pickup portion to move in the second direction. The fourth driving member 111 and the fifth driving member 112 can be a linear air cylinder, a linear electric cylinder, a linear oil cylinder, etc. In other embodiments, the first pickup unit 113 comprises a three-axis manipulator, the first pickup portion is connected to the three-axis manipulator, and as driven by the three-axis manipulator, lowers the first electrode plate 21 and transfers it to the stacking device 13.

The first detection unit 114 is a detection structure for detecting the number of the first electrode plates 21 picked up by the first pickup unit 113. By detecting the number of the first electrode plates 21 picked up by the first pickup unit 113, it is determined whether the picked up first electrode plates 21 stick together. The first detection unit 114 may be an industrial camera.

The first detection unit 114 can be directly electrically connected to the first pickup unit 113, or can be indirectly electrically connected through an intermediate component. For example, the intermediate component can be a controller, that is, the first detection unit 114 is electrically connected to the controller, and the first pickup unit 113 is electrically connected to the controller. When the first detection unit 114 detects that the number of the first electrode plates 21 picked up by the first pickup unit 113 exceeds one, the controller controls the first pickup unit 113 to transfer the picked up first electrode plates 21 to a waste area or a recovery area. Otherwise, the first electrode plate 21 is transferred to the stacking device 13.

The second pickup unit is a portion of the second transfer mechanism 12 for picking up the second electrode plate 22. The structure of the second pickup unit may refer to the structure of the first pickup unit 113, and will not be described in detail here.

The second detection unit is a detection structure for detecting the number of the second electrode plates 22 picked up by the second pickup unit. By detecting the number of the second electrode plates 22 picked up by the second pickup unit, it is determined whether the picked up second electrode plates 22 stick together. The second detection unit may be an industrial camera.

The second detection unit can be directly electrically connected to the second pickup unit, or can be indirectly electrically connected through an intermediate component. For example, the intermediate component can be a controller, that is, the second detection unit is electrically connected to the controller, and the second pickup unit is electrically connected to the controller. When the second detection unit detects that the number of the second electrode plates 22 picked up by the second pickup unit exceeds one, the controller controls the second pickup unit to transfer the picked up second electrode plates 22 to a waste area or a recovery area. Otherwise, the second electrode plate 22 is transferred to the stacking device 13.

A plurality of first electrode plates 21 can be stored in a bin, and two adjacent first electrode plates 21 are prone to stick together. The first detection unit 114 is arranged to detect the number of the first electrode plates 21 picked up by the first pickup unit 113, so that when the first pickup unit 113 picks up multiple first electrode plates 21, the first pickup unit 113 is controlled to move the picked up first electrode plates 21 to a waste area or a recovery area. Similarly, a plurality of second electrode plates 22 can be stored in a bin, and two adjacent second electrode plates 22 are prone to stick together. The second detection unit is arranged to detect the number of the second electrode plates 22 picked up by the second pickup unit, so that when the second pickup unit picks up multiple second electrode plates 22, the second pickup unit is controlled to transfer the picked up second electrode plates 22 to a waste area or a recovery area.

In some embodiments, the first detection unit 114 comprises a first thickness detection unit, the first thickness detection unit is used for detecting the thickness of the first electrode plates 21 picked up by the first pickup unit 113 in a single time to obtain the number of the first electrode plates 21. And/or the second detection unit comprises a second thickness detection unit, and the second thickness detection unit is used for detecting the thickness of the second electrode plates 22 picked up by the second pickup unit in a single time to obtain the number of the second electrode plates 22.

The first pickup unit 113 responds to the first thickness detection unit, and when the first thickness detection unit detects that the thickness of the first electrode plate 21 is greater than a preset value, the number of the first electrode plates 21 can be determined based on the ratio of the detected thickness to the preset thickness of the first electrode plate 21, thereby determining that there are multiple picked-up first electrode plate 21 that stick together. The first thickness detection unit may be a laser thickness gauge, an infrared thickness gauge, or the like.

Similarly, the second pickup unit responds to the second thickness detection unit, and when the second thickness detection unit detects that the thickness of the second electrode plate 22 is greater than a preset value, the number of the second electrode plates 22 can be determined based on the ratio of the detected thickness to the preset thickness of the second electrode plate 22, thereby determining that there are multiple picked-up second electrode plate 22 that stick together. The second thickness detection unit may be a laser thickness gauge, an infrared thickness gauge, or the like.

The first thickness detection unit obtains the number of the first electrode plates 21 by detecting the thickness of the first electrode plates 21 picked up by the first pickup unit 113, thereby determining whether there are multiple first electrode plates 21 picked up by the first pickup unit 113 that stick together. If so, the first pickup unit 113 can respond to the first thickness detection unit to transfer the first electrode plates 21 it picks up to a waste area or a recovery area. Similarly, the second thickness detection unit obtains the number of the second electrode plates 22 by detecting the thickness of the second electrode plates 22 picked up by the second pickup unit, thereby determining whether there are multiple second electrode plates 22 picked up by the second pickup unit that stick together. If so, the second pickup unit can respond to the second thickness detection unit to transfer the second electrode plates 22 it picks up to a waste area or a recovery area.

Referring to FIGS. 11 and 12, in some embodiments, the stacking system 10 further comprises a first detection mechanism 115, and the first detection mechanism 115 is disposed upstream of the stacking device 13. The first detection mechanism 115 is used for detecting the appearance of the first electrode plate 21 and the second electrode plate 22, and the first transfer mechanism 11 and the second transfer mechanism 12 both respond to the first detection mechanism 115.

The first detection mechanism 115 is a mechanism for detecting the appearance of the first electrode plate 21 and the second electrode plate 22 to confirm whether the first electrode plate 21 and the second electrode plate 22 have defects. The first detection mechanism 115 may be an industrial camera, which can confirm whether the first electrode plate 21 and the second electrode plate 22 have defects by taking photos and comparing them. The first transfer mechanism 11 may be electrically connected to the first detection mechanism 115 directly or may be electrically connected to the first detection mechanism 115 through an intermediate component. Similarly, the second transfer mechanism 12 may be electrically connected to the first detection mechanism 115 directly or may be electrically connected to the first detection mechanism 115 through an intermediate component.

When the first detection mechanism 115 detects that the first electrode plate 21 transferred by the first transfer mechanism 11 has defects, the first transfer mechanism 11 responds to the first detection mechanism 115 to send the transferred first electrode plate 21 to a waste area or a recovery area. Otherwise, the first electrode plate 21 is transferred to the stacking device 13. When the first detection mechanism 115 detects that the second electrode plate 22 transferred by the second transfer mechanism 12 has defects, the second transfer mechanism 12 responds to the first detection mechanism 115 to send the transferred second electrode plate 22 to a waste area or a recovery area. Otherwise, the second electrode plate 22 is transferred to the stacking device 13.

The first detection mechanism 115 is provided to detect the appearance of the first electrode plate 21 and the second electrode plate 22 to confirm whether the first electrode plate 21 transferred by the first transfer mechanism 11 and the second electrode plate 22 transferred by the second transfer mechanism 12 meet the standards. If the standards are met, the first transfer mechanism 11 is allowed to transfer the first electrode plate 21 it picks up to the stacking device 13, and the second transfer mechanism 12 is allowed to transfer the second electrode plate 22 it picks up to the stacking device 13. If the standards are not met, the first transfer mechanism 11 transfers the first electrode plate 21 it transfers to a waste area or a recovery area, and the second transfer mechanism 12 transfers the second electrode plate 22 it transfers to a waste area or a recovery area.

Referring to FIGS. 11 and 12, in some embodiments, the stacking system 10 further comprises a third dust removal mechanism 116, the third dust removal mechanism 116 is disposed downstream of the first detection mechanism 115 and upstream of the stacking device 13. The third dust removal mechanism 116 is used for removing dust from the first electrode plate 21 transferred by the first transfer mechanism 11 and the second electrode plate 22 transferred by the second transfer mechanism 12. The third dust removal mechanism 116 may comprise a dust removal brush, which is used for removing dust from the first electrode plate 21 and the second electrode plate 22.

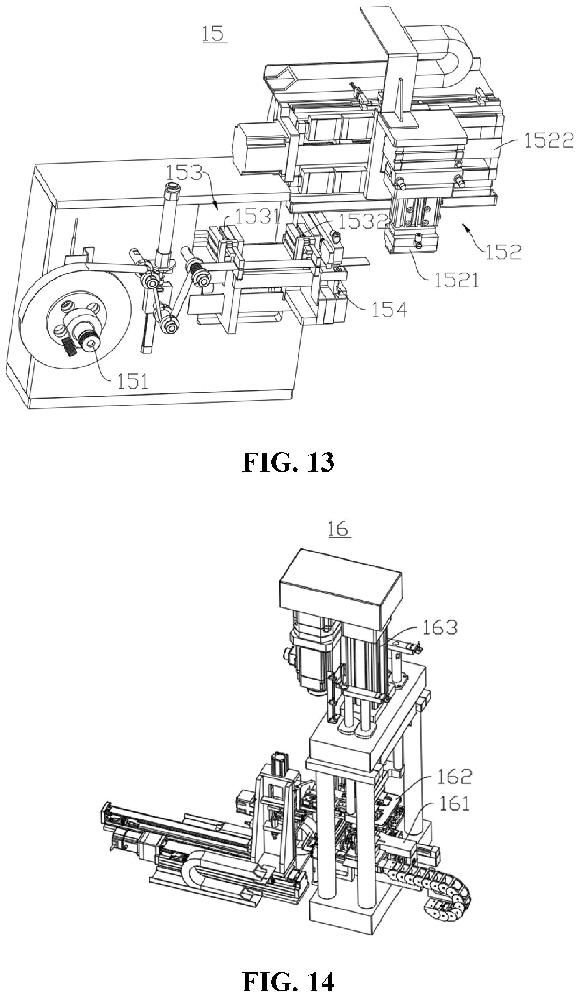

Referring to FIG. 13, FIG. 13 is a schematic structural diagram of a first adhesive applying mechanism 15 provided in some embodiments of the present application. In some embodiments, the stacking system 10 comprises a first adhesive applying mechanism 15, and the first adhesive applying mechanism 15 is disposed downstream of the stacking device 13. The first adhesive applying mechanism 15 is used for applying a finishing adhesive or a corner adhesive to the battery cell 20.

The first adhesive applying mechanism 15 is a mechanism for applying a finishing adhesive or a corner adhesive to the battery cell 20. The stacking system 10 further comprises a third transfer mechanism 137, the third transfer mechanism 137 is disposed downstream of the stacking device 13, and the third transfer mechanism 137 is used for transferring the battery cells 20 stacked by the stacking device 13 to the first adhesive applying mechanism 15.

By arranging the first adhesive applying mechanism 15, after the stacking device 13 completes the stacking to form the battery cell 20, a finishing adhesive or a corner adhesive is applied to the battery cell 20 to stabilize the shape of the battery cell 20 and reduce the risk of collapse of the battery cell 20.

Referring to FIG. 13, in some embodiments, the first adhesive applying mechanism 15 comprises an adhesive unwinding mechanism 151, an adhesive applying component 152, a pulling mechanism 153, and a cutter mechanism 154. The adhesive unwinding mechanism 151 is used for unwinding an adhesive tape. The pulling mechanism 153 is used for pulling the adhesive tape so as to deliver the adhesive tape to the adhesive applying component 152. The cutter mechanism 154 is used for cutting off the portion of the adhesive tape between the pulling mechanism 153 and the adhesive applying component 152 to obtain an adhesive. The adhesive applying component 152 is used for applying the adhesive to the battery cell 20.

The adhesive unwinding mechanism 151 is a mechanism for unwinding the adhesive tape. The adhesive unwinding mechanism 151 may comprise a second unwinding roller, and the second unwinding roller is used for mounting the adhesive tape roll. Since the pulling mechanism 153 is provided, the adhesive tape can be unwound at a fixed length driven by the pulling mechanism 153, and therefore the second unwinding roller does not need to be provided with a driving mechanism for active rotation.

The pulling mechanism 153 is a mechanism for pulling the adhesive tape to achieve fixed-length unwinding of the adhesive tape. The pulling mechanism 153 can pull out a fixed length of adhesive tape as needed. The adhesive tape pulled out by the pulling mechanism 153 is received by the adhesive applying component 152.

The cutter mechanism 154 can cut off the portion of the adhesive tape between the pulling mechanism 153 and the adhesive applying component 152 to obtain an adhesive of a fixed length. The cutter mechanism 154 comprises a cutter and a cutter driving member, the cutter driving member is arranged between the pulling mechanism 153 and the adhesive applying component 152, the cutter driving member is connected to the cutter, and the cutter driving member is used for driving the cutter toward the adhesive tape, thereby cutting off the adhesive tape to form the adhesive.

The adhesive applying component 152 transfers the cutoff adhesive and adheres it to the battery cell 20 to complete the application of a finishing adhesive or a corner adhesive.

The pulling mechanism 153 can pull the adhesive tape, thereby unwinding the adhesive tape. In this way, the unwinding can be performed according to the required amount of adhesive tape. After the pulling mechanism 153 pulls the adhesive tape and supplies the adhesive tape to the adhesive applying component 152, the cutter mechanism 154 can cut off the adhesive tape between the pulling mechanism 153 and the adhesive applying component 152 to obtain an adhesive. The adhesive applying component 152 can apply the adhesive to the battery cell 20 to complete the application of a finishing adhesive or a corner adhesive. The first adhesive applying mechanism 15 is used to perform the adhesive applying operation, and the adhesive of the required length can be unwound each time as needed and applied to the battery cell 20. In this way, the length of the adhesive is appropriate, which can not only effectively stabilize the shape of the battery cell 20 and reduce the risk of collapse of the battery cell 20, but also not easily interfere with other components.

Referring to FIG. 13, in some embodiments, the pulling mechanism 153 comprises a first clamping unit 1531 and a second clamping unit 1532, and both the first clamping unit 1531 and the second clamping unit 1532 are used for clamping the adhesive tape. The second clamping unit 1532 can move toward or away from the first clamping unit 1531.

The first clamping unit 1531 is used for clamping the adhesive tape, and the position of the first clamping unit 1531 is fixed. The second clamping unit 1532 is also used for clamping the adhesive tape, but the second clamping unit 1532 can move toward or away from the first clamping unit 1531.

Optionally, along the extension direction of the adhesive tape, the first clamping unit 1531 is disposed upstream of the second clamping unit 1532, and the second clamping unit 1532 is disposed upstream of the adhesive applying component 152. In this way, when the second clamping unit 1532 is released and reset, the first clamping unit 1531 can clamp the adhesive tape, reducing the risk of the adhesive tape falling or rolling back to the adhesive tape unwinding mechanism.

The first clamping unit 1531 may comprise a clamping jaw and a first clamping jaw driving mechanism, the clamping jaw is connected to the first clamping jaw driving mechanism, and the first clamping jaw driving mechanism can drive the clamping jaw to clamp or loosen so as to clamp or release the adhesive tape.

The second clamping unit 1532 may comprise a clamping jaw and a second clamping jaw driving mechanism, the clamping jaw is connected to the second clamping jaw driving mechanism, and the second clamping jaw driving mechanism can not only drive the clamping jaw to clamp or loosen, but also drive the clamping jaw to move toward or away from the first clamping unit 1531.

When the adhesive tape needs to be unwound, the first clamping unit 1531 is loosened, and the second clamping unit 1532 clamps the adhesive tape and moves toward the first clamping unit 1531 or away from the first clamping unit 1531 to pull the adhesive tape to unwind. When the first clamping unit 1531 moves into position, the adhesive tape of a fixed length is unwound. At this time, the first clamping unit 1531 and the second clamping unit 1532 both clamp the adhesive tape, thereby facilitating the cutter mechanism 154 to cut off the adhesive tape to form the adhesive. Afterwards, the second clamping unit 1532 releases the adhesive tape and moves away from the first clamping unit 1531 or toward the first clamping unit 1531 to complete the reset and prepare for the next pulling.

Referring to FIG. 13, in some embodiments, the adhesive applying assembly 152 comprises a fourth driving mechanism 1522 and an adsorption member 1521, and the adsorption member 1521 is used for adsorbing the adhesive. The fourth driving mechanism 1522 is connected to the adsorption member 1521, and the fourth driving mechanism 1522 is used for driving the adsorption member 1521 to move so as to apply the adhesive to the battery cell 20.

A plurality of adsorption holes 1311 may be provided on the adsorption member 1521, the adsorption holes 1311 are connected to a negative pressure mechanism, the negative pressure mechanism is used to create a negative pressure by pumping for the adsorption holes 1311, thereby adsorbing the adhesive tape.

The fourth driving mechanism 1522 is a mechanism used to move the adsorption member 1521, thereby adhering the adhesive adsorbed by the adsorption member 1521 to the battery cell 20. The fourth driving mechanism 1522 may be a two-axis manipulator, a three-axis manipulator, a four-axis manipulator, etc.

The adhesive is adsorbed by the adsorption member 1521, which can not only pick up the adhesive better but also not easily damage the adhesive. The adsorption member 1521 is driven to move by the fourth driving mechanism 1522 to transfer the adhesive and apply the adhesive to the battery cell 20.

In some embodiments, the stacking system 10 comprises a plurality of first adhesive applying mechanisms 15, and all of the plurality of first adhesive applying mechanisms 15 are used for applying the adhesive to the battery cell 20.

The stacking system 10 may comprise two first adhesive applying mechanisms 15, three first adhesive applying mechanisms 15, four first adhesive applying mechanisms 15, or more than four first adhesive applying mechanisms 15.

Optionally, the stacking system 10 comprises five first adhesive applying mechanisms 15, one of the first adhesive applying mechanisms 15 is used for applying a finishing adhesive to the battery cell 20, and the remaining four first adhesive applying mechanisms 15 are used for applying a corner adhesive to the battery cell 20.

By providing a plurality of first adhesive applying mechanisms 15, the plurality of first adhesive applying mechanisms 15 can perform adhesive applying simultaneously, thereby improving adhesive applying efficiency and improving production efficiency.

Referring to FIG. 14, FIG. 14 is a schematic structural diagram of a hot pressing device 16 provided in some embodiments of the present application. In some embodiments, the stacking system 10 comprises a hot pressing device 16, and the hot pressing device 16 is disposed downstream of the stacking device 13. The hot pressing device 16 is used for hot pressing the battery cell 20.

The hot pressing device 16 is a structure for hot pressing the battery cell 20, the hot pressing device 16 is disposed downstream of the first adhesive applying mechanism 15 to hot press the battery cell 20 with the finishing adhesive and corner adhesive adhered. The battery cell 20 located at the first adhesive applying mechanism 15 can be picked up by a robot and brought to the hot pressing device 16 so that the hot pressing device 16 can hot press the battery cell 20.

By providing the hot pressing device 16 to hot press the battery cell 20, on the one hand, the flatness of the battery cell 20 can be improved so that the thickness of the battery cell 20 meets the requirements and has high consistency. On the other hand, it can reduce the wrinkles of the separator 23, expel the air inside the battery cell 20, make the separator 23 and the first electrode plate 21, and the separator 23 and the second electrode plate 22 tightly attached together, shorten the diffusion distance of metal ions, and reduce the internal resistance of the battery cell 20.

Referring to FIG. 14, in some embodiments, the hot pressing device 16 comprises a hot pressing workbench 161, a hot pressing member 162, and a fifth driving mechanism 163. The hot pressing workbench 161 is used to place the battery cell 20, and the hot pressing member 162 is arranged opposite to the hot pressing workbench 161. The fifth driving mechanism 163 is connected to the hot pressing member 162, and the fifth driving mechanism 163 is used for driving the hot pressing member 162 toward the battery cell 20 so that the hot pressing member 162 hot presses the battery cell 20.

The hot pressing workbench 161 is a platform for supporting the battery cells 20. Along the second direction, the hot pressing member 162 is disposed opposite to the hot pressing workbench 161. The fifth driving mechanism 163 is connected to the hot pressing member 162 to drive the hot pressing member 162 toward the hot pressing workbench 161, thereby hot pressing the battery cell 20 located on the hot pressing workbench 161.

The fifth driving mechanism 163 may comprise a linear driving member, the output end of the linear driving member is connected to the hot pressing member 162, and the linear driving member drives the hot pressing member 162 to move along the second direction. The linear driving member can be a linear air cylinder, a linear electric cylinder, a linear oil cylinder, etc. The fifth driving mechanism 163 may also comprise a rotating driving member and a transmission mechanism. The rotating driving member is connected to the hot pressing member 162 through the transmission mechanism. The rotating driving member outputs rotational motion, and the transmission mechanism converts the rotational motion output by the rotating driving member into linear motion of the hot pressing member 162. The rotating driving member can be a motor, an internal combustion engine, etc. The transmission mechanism can be a slider-crank mechanism, a lead screw nut mechanism, etc.

The battery cell 20 can be placed on the hot pressing workbench 161, and in this case, the fifth driving mechanism 163 can drive the hot pressing member 162 toward the battery cell 20, thereby hot pressing the battery cell 20. After the hot pressing is completed, the fifth driving mechanism 163 can drive the hot pressing member 162 away from the battery cell 20, thereby allowing the battery cell 20 to be transferred to the next station and prepare for the next hot pressing.

In some embodiments, the hot pressing member 162 is provided with a first probe and a second probe, the first probe and the second probe are used for being electrically connected to the first electrode 21 and the second electrode 22 of the battery cell 20 respectively when the hot pressing member 162 hot presses the battery cell 20.

By providing a first probe and a second probe, the first probe and the second probe can be electrically connected to the first electrode plate 21 and the second electrode plate 22 of the battery cell 20 respectively, so as to perform a resistance test on the battery cell 20.

In some embodiments, the hot pressing platform is provided with a plurality of positions for placing battery cells 20, which can place a plurality of battery cells 20 at one time. The fifth driving mechanism 163 drives the hot pressing member 162 toward the hot pressing platform, thereby hot pressing a plurality of battery cells 20 at one time.

In some embodiments, the surface of the hot pressing member 162 facing the hot pressing workbench 161 is provided with an anti-sticking coating.

The "surface of the hot pressing member 162 facing the hot pressing workbench 161" refers to the surface of the hot pressing member 162 that contacts the battery cells 20.

Anti-sticking coating refers to a coating used to reduce material adhesion.

By providing an anti-sticking coating on the surface of the hot pressing member 162 facing the hot pressing workbench 161, it can not only reduce the risk of adhesion between the hot pressing member 162 and the battery cell 20, but also reduce the risk of other impurities adhering to the hot pressing member 162, thereby reducing the risk of damage to the battery cell 20 caused by the hot pressing member 162 when hot pressing the battery cell 20.

In some embodiments, the anti-sticking coating comprises a ceramic layer.

A ceramic layer is used as the anti-sticking coating, which has a good anti-sticking effect and a low cost.

Optionally, the anti-sticking coating may also be a nano-antifouling fluoride coating, a diamond-like carbon coating, or the like.

In some embodiments, the stacking system 10 comprises a tab welding mechanism 17, and the tab welding mechanism 17 is disposed downstream of the stacking device 13. The tab welding mechanism 17 is used for welding tabs on the battery cell 20.

The tab welding mechanism 17 is a mechanism for welding tabs to the battery cell 20. The tab welding mechanism 17 is arranged downstream of the stacking device 13. In combination with some of the above embodiments, the tab welding mechanism 17 is specifically located downstream of the hot pressing device 16, and the battery cell 20 can be transferred from the hot pressing device 16 to the tab welding mechanism 17 by a manipulator to facilitate welding the tabs for the battery cell 20.

The tab welding mechanism 17 is provided to facilitate automatic welding of the tab for the battery cell 20, thereby improving the degree of automation of the stacking system 10.

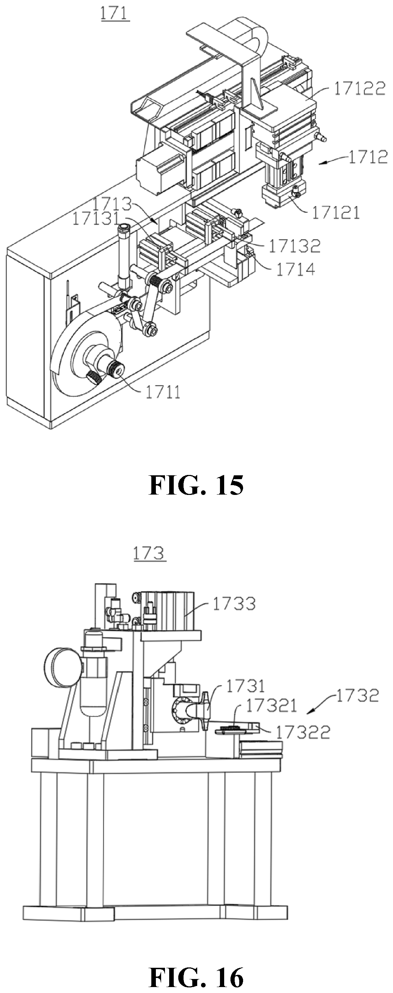

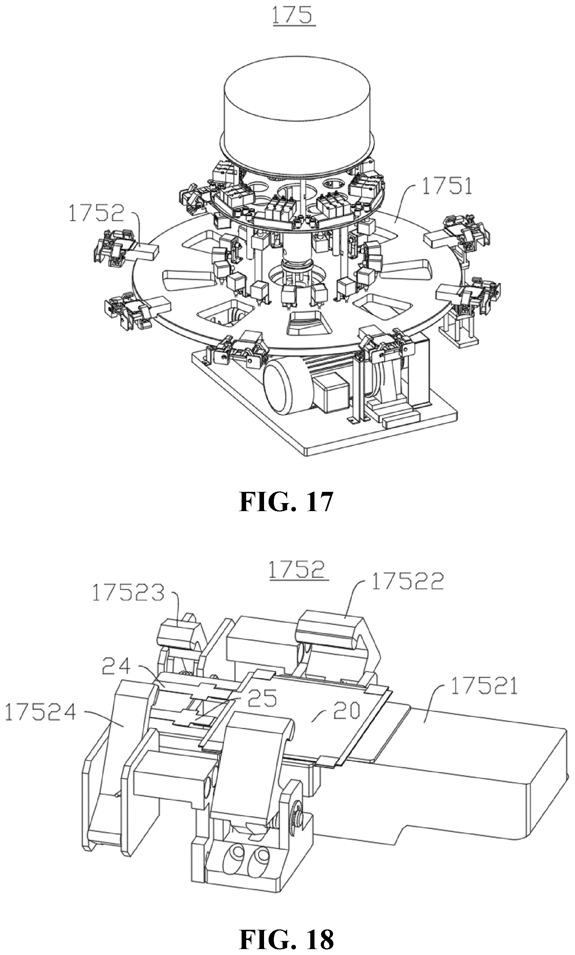

Referring to FIGS. 15, 16 and 17, FIG. 15 is a schematic structural diagram of a first tab providing mechanism 171 provided in some embodiments of the present application. FIG. 16 is a schematic structural diagram of a first welding mechanism 173 provided in some embodiments of the present application. FIG. 17 is a schematic structural diagram of a conveying mechanism 175 provided in some embodiments of the present application. In some embodiments, the tab welding mechanism 17 comprises a first tab providing mechanism 171, a second tab providing mechanism, a first welding mechanism 173, a second welding mechanism, and a conveying mechanism 175. The first tab providing mechanism 171 is disposed at the first station, and the first tab providing mechanism 171 is used for providing the first tab 24. The second tab providing mechanism is disposed at the second station, and the second tab providing mechanism is used for providing the second tab 25. The first welding mechanism 173 is disposed at the third station, and the first welding mechanism 173 is used for welding the first tab 24 and the first electrode plate 21. The second welding mechanism is provided at the fourth station, and the second welding mechanism is used for welding the second tab 25 and the second electrode plate 22. The conveying mechanism 175 is used for conveying the battery cells 20 to the first station, the second station, the third station and the fourth station.

The first tab providing mechanism 171 and the second tab providing mechanism are used to provide the first tab 24 and the second tab 25 respectively. The first tab providing mechanism 171 and the second tab providing mechanism have the same structure, and the following description will take the first tab providing mechanism 171 as an example.

The first tab providing mechanism 171 comprises a material strip unwinding mechanism 1711, a fourth transfer mechanism 1712, a strip pulling mechanism 1713 and a cutting mechanism 1714. The material strip unwinding mechanism 1711 is used for unwinding the material strip. The strip pulling mechanism 1713 is used for pulling the material strip to convey the material strip to the fourth transfer mechanism 1712. The cutting mechanism 1714 is used for cutting off the portion of the material strip located between the strip pulling mechanism 1713 and the fourth transfer mechanism 1712 to obtain the first tab 24. The fourth transfer mechanism 1712 is used for transferring the first tab 24 to the battery cell 20.

The material strip unwinding mechanism 1711 is a mechanism for unwinding the material strip. The material strip unwinding mechanism 1711 may comprise a third unwinding roller, and the third unwinding roller is used for mounting the material strip roll. Since the strip pulling mechanism 1713 is provided, the material strip can be unwound at a fixed length driven by the strip pulling mechanism 1713, and therefore the third unwinding roller does not need to be provided with a driving mechanism for active rotation.

The strip pulling mechanism 1713 is a mechanism for pulling the material strip to achieve fixed-length unwinding of the material strip. The strip pulling mechanism 1713 can pull out a fixed length of material strip as needed. The material strip pulled out by the strip pulling mechanism 1713 is received by the fourth transfer mechanism 1712.

The cutting mechanism 1714 can cut off the portion of the material strip located between the strip pulling mechanism 1713 and the fourth transfer mechanism 1712 to obtain the first tab 24 of a fixed length. The cutting mechanism 1714 comprises a cutter and a cutting driving member, the cutting driving member is arranged between the strip pulling mechanism 1713 and the fourth transfer mechanism 1712, the cutting driving member is connected to the cutter, and the cutting driving member is used for driving the cutter toward the material strip, thereby cutting off the material strip to form the first tab 24.

The fourth transfer mechanism 1712 transfers the cut-off first tab 24 to the battery cell 20.

The strip pulling mechanism 1713 can pull the material strip, thereby unwinding the material strip. In this way, the unwinding can be performed according to the required amount of material strip. The strip pulling mechanism 1713 pulls the material strip and supplies the material strip to the fourth transfer mechanism 1712. Then, the cutting mechanism 1714 can cut off the material strip between the strip pulling mechanism 1713 and the fourth transfer mechanism 1712, thereby obtaining the first tab 24. The fourth transfer mechanism 1712 can provide the first tab 24 to the battery cell 20. The first tab providing mechanism 171 is used for providing the first tab 24, the material strip of required length can be unwound each time as needed, and then cut into the first tab 24 to provide to the battery cell 20. In this way, the length of the first tab 24 is more appropriate, which is conducive to improving the quality of the battery cell 20.

Referring to FIG. 15, in some embodiments, the strip pulling mechanism 1713 comprises a third clamping unit 17131 and a fourth clamping unit 17132, and both the third clamping unit 17131 and the fourth clamping unit 17132 are used for clamping the material strip. The fourth clamping unit 17132 can move toward or away from the third clamping unit 17131.

The third clamping unit 17131 is used for clamping the material strip, and the position of the third clamping unit 17131 is fixed. The fourth clamping unit 17132 is also used for clamping the material strip, but the fourth clamping unit 17132 can move toward or away from the third clamping unit 17131.

Optionally, along the extension direction of the material strip, the third clamping unit 17131 is arranged upstream of the fourth clamping unit 17132, and the fourth clamping unit 17132 is arranged upstream of the fourth transfer mechanism 1712. In this way, when the fourth clamping unit 17132 is released and reset, the third clamping unit 17131 can clamp the material strip, reducing the risk of the material strip falling or rolling back to the material strip unwinding mechanism 1711.

The third clamping unit 17131 may comprise a clamping jaw and a third clamping jaw 17524 driving mechanism, the clamping jaw is connected to the third clamping jaw 17524 driving mechanism, and the third clamping jaw 17524 driving mechanism can drive the clamping jaw to clamp or loosen so as to clamp or release the material strip.

The fourth clamping unit 17132 may comprise a clamping jaw and a fourth clamping jaw driving mechanism, the clamping jaw is connected to the fourth clamping jaw driving mechanism, and the fourth clamping jaw driving mechanism can not only drive the clamping jaw to clamp or loosen, but also drive the clamping jaw to move toward or away from the third clamping unit 17131.

When the adhesive tape needs to be unwound, the third clamping unit 17131 is loosened, and the fourth clamping unit 17132 clamps the adhesive tape and moves toward the third clamping unit 17131 or away from the third clamping unit 17131 to pull the adhesive tape to unwind. When the third clamping unit 17131 moves into position, the adhesive tape of a fixed length is unwound. At this time, the third clamping unit 17131 and the fourth clamping unit 17132 both clamp the adhesive tape, thereby facilitating the cutting mechanism 1714 to cut off the material strip to form the first tab 24. Afterwards, the fourth clamping unit 17132 releases the adhesive tape and moves away from the third clamping unit 17131 or toward the third clamping unit 17131 to complete the reset and prepare for the next pulling.

Referring to FIG. 15, in some embodiments, the fourth transfer mechanism 1712 comprises a sixth driving member 17122 and a pickup member 17121, and the pickup member 17121 is used for picking up the first tab 24. The sixth driving member 17122 is connected to the pickup member 17121, and the sixth driving member 17122 is used for driving the pickup member 17121 to move, so as to provide the first tab 24 to the battery cell 20.

A plurality of adsorption holes 1311 may be provided on the pickup member 17121, the adsorption holes 1311 are connected to a negative pressure mechanism, the negative pressure mechanism is used to create a negative pressure by pumping for the adsorption holes 1311, thereby adsorbing the first tab 24. In other embodiments, the pickup member 17121 may also be a clamping jaw for picking up the first tab 24 by clamping.

The sixth driving member 17122 is used to move the pickup member 17121, thereby providing the adhesive picked up by the pickup member 17121 to the battery cell 20. The sixth driving mechanism 17122 may be a two-axis manipulator, a three-axis manipulator, a four-axis manipulator, etc.

The first welding mechanism 173 is a mechanism for welding the first tab 24 to the battery cell 20, and the second welding mechanism is a mechanism for welding the second tab 25 to the battery cell 20. The first welding mechanism 173 and the second welding mechanism can be ultrasonic welding mechanisms, laser welding mechanisms, etc.

The conveying mechanism 175 can convey the battery cell 20 to the first station, the second station, the third station and the fourth station, so that the battery cell 20 passes through the first tab providing mechanism 171, the second tab providing mechanism, the first welding mechanism 173 and the second welding mechanism. The conveying mechanism 175 may be a conveyor belt conveying mechanism 175, a roller conveying mechanism 175, or the like.

The conveying mechanism 175 conveys the battery cell 20 to the first station, the second station, the third station and the fourth station, and when the battery cell 20 passes through the first station, the first tab providing mechanism 171 provides the first tab 24 to the battery cell 20. When the battery cell 20 passes through the second station, the second tab providing mechanism provides the second tab 25 to the battery cell 20. When the battery cell 20 passes through the third station, the first welding mechanism 173 welds the first tab 24 to the battery cell 20. When the battery cell 20 passes through the fourth station, the second welding mechanism welds the second tab 25 to the battery cell 20 to complete the automatic welding of the first electrode plate 21 and the battery cell 20 and the automatic welding of the second electrode plate 22 and the battery cell 20, with a high degree of automation.

Referring to FIGS. 15, 16 and 17, in some embodiments, the conveying mechanism 175 comprises a turntable 1751, and the first tab providing mechanism 171, the second tab providing mechanism, the first welding mechanism 173 and the second welding mechanism are arranged along the circumferential direction of the turntable 1751.

"The first tab providing mechanism 171, the second tab providing mechanism, the first welding mechanism 173 and the second welding mechanism are arranged along the circumferential direction of the turntable 1751" means that along the circumferential direction of the turntable 1751, the first tab providing mechanism 171, the second tab providing mechanism, the first welding mechanism 173 and the second welding mechanism are arranged outside the turntable 1751, rather than being arranged on the turntable 1751. In this way, as the turntable 1751 rotates, the battery cell 20 can pass through the first tab providing mechanism 171, the second tab providing mechanism, the first welding mechanism 173 and the second welding mechanism.

The conveying mechanism 175 comprises a turntable 1751, and the battery cells 20 are conveyed to the first station, the second station, the third station and the fourth station through the rotation of the turntable 1751. The turntable 1751 occupies a small area and has high conveying efficiency and conveying stability.

Referring to FIGS. 15, 16, 17 and 18, FIG. 18 is a schematic structural diagram of a positioning clamp 1752 provided in some embodiments of the present application. In some embodiments, a positioning clamp 1752 is provided on the turntable 1751, and the positioning clamp 1752 is used for positioning the battery cell 20, the first tab 24 and the second tab 25.

The positioning clamp 1752 is provided to position the battery cell 20, the first tab 24 and the second tab 25, so that the relative position of the first tab 24 and the battery cell 20, and the relative position of the second tab 25 and the battery cell 20 are not easily changed, which is conducive to improving the welding effect.

Referring to FIGS. 15, 16, 17 and 18, in some embodiments, the positioning clamp 1752 comprises a supporting platform 17521, a first clamping jaw 17522, a second clamping jaw 17523 and a third clamping jaw 17524. The supporting platform 17521 is connected to the turntable 1751. The first clamping jaw 17522, the second clamping jaw 17523 and the third clamping jaw 17524 are connected to the supporting platform 17521. The first clamping jaw 17522 is used for positioning the battery cell 20 on the supporting platform 17521. The second clamping jaw 17523 is used for positioning the first tab 24 on the battery cell 20. The third clamping jaw 17524 is used for positioning the second tab 25 on the battery cell 20.

The supporting platform 17521 is an installation base for the positioning clamp 1752, and the supporting platform 17521 is used to support the battery cell 20, the first tab 24, and the second tab 25. The supporting platform 17521 is connected to the turntable 1751 so that the positioning clamp 1752 rotates along with the rotation of the turntable 1751.

The first clamping jaw 17522 may be rotatably connected to the supporting platform 17521, so that the battery cell 20 can be clamped and released by rotating the first clamping jaw 17522. The first clamping jaw 17522 may also be slidably connected to the supporting platform 17521, so that the battery cell 20 can be clamped and released by sliding the first clamping jaw 17522. In addition, the driving mechanism may be provided to drive the first clamping jaw 17522 to operate, thereby automatically achieving the clamping and releasing of the battery cell 20 by the first clamping jaw 17522.

The second clamping jaw 17523 may be rotatably connected to the supporting platform 17521, so that the first tab 24 can be clamped and released by rotating the second clamping jaw 17523 to position the first tab 24 to the battery cell 20. The second clamping jaw 17523 may also be slidably connected to the supporting platform 17521, so that the first tab 24 can be clamped and released by sliding the second clamping jaw 17523 to position the first tab 24 to the battery cell 20. In addition, the driving mechanism may be provided to drive the second clamping jaw 17523 to operate, thereby automatically achieving the clamping and releasing of the first tab 24 by the second clamping jaw 17523.

The third clamping jaw 17524 may be rotatably connected to the supporting platform 17521, so that the second tab 25 can be clamped and released by rotating the third clamping jaw 17524 to position the third tab to the battery cell 20. The third clamping jaw 17524 may also be slidably connected to the supporting platform 17521, so that the second tab 25 can be clamped and released by sliding the third clamping jaw 17524 to position the second tab 25 to the battery cell 20. In addition, the driving mechanism may be provided to drive the third clamping jaw 17524 to operate, thereby automatically achieving the clamping and releasing of the second tab 25 by the third clamping jaw 17524.

The supporting platform 17521 is connected to the turntable 1751, and the turntable 1751 can convey the supporting platform 17521 to the first station, the second station, the third station and the fourth station. The first clamping jaw 17522 can position the battery cell 20 on the supporting platform 17521, so that the relative position of the battery cell 20 and the supporting platform 17521 is not easily changed. The second clamping jaw 17523 can position the first tab 24 on the battery cell 20, so that the relative position of the first tab 24 and the battery cell 20 is not easily changed. The third clamping jaw 17524 can position the second tab 25 on the battery cell 20, so that the relative position of the second tab 25 and the battery cell 20 is not easily changed, which is conducive to improving the welding effect.

Referring to FIGS. 15, 16, 17 and 18, in some embodiments, the first welding mechanism 173 comprises a first welding head 1731 and a first dust removal mechanism 1732. The first welding head 1731 is used for welding the first tab 24 and the first electrode plate 21, and the first dust removal mechanism 1732 is used for removing dust from the first welding head 1731. And/or the second welding mechanism comprises a second welding head and a second dust removal mechanism. The second welding head is used for welding the second tab 25 and the second electrode plate 22, and the second dust removal mechanism is used for removing dust from the second welding head.

The first welding head 1731 is a welding component for welding the first tab 24 and the first electrode plate 21. The first welding head 1731 can be a laser welding head, an ultrasonic welding head, etc. The first welding mechanism 173 may further comprise a seventh driving member 1733, the seventh driving member 1733 is connected to the first welding head 1731 to drive the first welding head 1731 toward the battery cell 20, thereby welding the first tab 24 to the first electrode plate 21.

The first dust removal mechanism 1732 is a mechanism for removing dust from the first welding head 1731. The first dust removal mechanism 1732 may comprise a dust removal member 17321 and a sixth driving mechanism 17322, the dust removal member 17321 is used for removing dust from the first welding head 1731, the sixth driving mechanism 17322 is connected to the dust removal member 17321, and the sixth driving mechanism 17322 is used for driving the dust removal member 17321 to move toward or away from the first welding head 1731. The dust removal member 17321 can be a dust removal brush, an electrostatic dust collector, etc.

The structure of the second welding mechanism may be the same as that of the first welding mechanism 173, and will not be described in detail here.

The first dust removal mechanism 1732 is provided to remove dust from the first welding head 1731, so that the first welding head 1731 is kept clean before welding the first tab 24 and the battery cell 20 each time, which is conducive to improving the welding effect. Similarly, the second dust removal mechanism is provided to remove dust from the second welding head, so that the second welding head is kept clean before welding the second tab 25 and the battery cell 20 each time, which is conducive to improving the welding effect.

In some embodiments, the tab welding mechanism 17 further comprises a second adhesive applying mechanism, the second adhesive applying mechanism is disposed at the fifth station, and the conveying mechanism 175 is also used for conveying the battery cell 20 to the fifth station. The second adhesive applying mechanism is used for applying the adhesive to the welding position between the first tab 24 and the first electrode plate 21 and the welding position between the second tab 25 and the second electrode plate 22.

The second adhesive applying mechanism is a mechanism used for applying the adhesive to the welding position between the first tab 24 and the first electrode plate 21 and the welding position between the second tab 25 and the second electrode plate 22. The second adhesive applying mechanism is arranged at the fifth station, downstream of the second welding mechanism. After the second welding mechanism completes welding, the conveying mechanism 175 conveys the battery cell 20 to the fifth station so that the second adhesive applying mechanism can apply the adhesive at the welding position of the first tab 24 and the first electrode plate 21 and the welding position of the second tab 25 and the second electrode plate 22.

The structure of the second adhesive applying mechanism may be the same as that of the first adhesive applying mechanism 15, and will not be described in detail here.

The conveying mechanism 175 can convey the battery cells 20 to the first, second, third, fourth and fifth stations, at the third station, the first welding mechanism 173 welds the first electrode plate 21 to the battery cell 20, and at the fourth station, the second welding mechanism welds the second electrode plate 22 to the battery cell 20. At the fifth station, the second adhesive applying mechanism can apply the adhesive to the welding position between the first tab 24 and the first electrode plate 21 and the welding position between the second tab 25 and the second electrode plate 22 to protect the welding positions.

In some embodiments, the tab welding mechanism 17 comprises a second detection mechanism, and the second detection mechanism is disposed at the sixth station. The conveying mechanism 175 is further used for conveying the battery cell 20 to the sixth station, and the second detection mechanism is used for detecting the appearance of the battery cell 20.

The second detection mechanism is a mechanism for detecting the appearance of the battery cell 20 to confirm whether the battery cell 20 has defects. The second detection mechanism may be an industrial camera, which takes photos and compares them to confirm whether the battery cell 20 has defects. Before the fifth station, the battery cells 20 have been manufactured, and the second detection mechanism is used for detecting the appearance of the manufactured battery cells 20 to confirm whether the battery cells 20 are qualified.

The conveying mechanism 175 can convey the battery cells 20 to the first, second, third, fourth, fifth and sixth stations, at the third station, the first welding mechanism 173 welds the first electrode plate 21 to the battery cell 20, and at the fourth station, the second welding mechanism welds the second electrode plate 22 to the battery cell 20. At the fifth station, the second adhesive applying mechanism can apply the adhesive to the welding position between the first tab 24 and the first electrode plate 21 and the welding position between the second tab 25 and the second electrode plate 22 to protect the welding positions. At the sixth station, the second detection mechanism can detect the appearance of the battery cell 20 after welding and adhesive application to confirm whether the battery cell 20 meets the standards.

Referring to FIG. 1, in some embodiments, the stacking system 10 comprises a first adhesive applying mechanism 15, a hot pressing device 16, and a tab welding mechanism 17. The first adhesive applying mechanism 15 is used for applying a finishing adhesive or a corner adhesive to the battery cell 20. The hot pressing device 16 is used for hot pressing the battery cell 20. The tab welding mechanism 17 is used for welding tabs on the battery cell 20. The first adhesive applying mechanism 15 is disposed downstream of the stacking device 13, the hot pressing device 16 is disposed downstream of the first adhesive applying mechanism 15, and the tab welding mechanism 17 is disposed downstream of the hot pressing device 16.

The first adhesive applying mechanism 15 can apply a finishing adhesive or a corner adhesive to battery cells 20 where stacking has been completed, the hot pressing device 16 can hot press the battery cells 20 after the adhesive has been applied, and the tab welding mechanism 17 can weld the first tab 24 and the second tab 25 to the battery cells 20 where hot pressing has been completed to produce the final battery cells 20 with a high degree of automation.

According to some embodiments of the present application, refer to FIGS. 1 to 18.

An embodiment of the present application provides a stacking system 10, and the stacking system 10 comprises a first transfer mechanism 11, a second transfer mechanism 12, a separator unwinding mechanism 14, and a stacking device 13. The first transfer mechanism 11 is used for transferring a first electrode plate 21. The second transfer mechanism 12 is used for transferring a second electrode plate 22, and the polarity of the second electrode plate 22 is opposite to that of the first electrode plate 21. The separator unwinding mechanism 14 is used for unwinding the separator 23. The stacking device 13 is used for receiving the first electrode plate 21, the separator 23 and the second electrode plate 22, and for stacking the first electrode plate 21, the separator 23 and the second electrode plate 22 to form a battery cell 20. The first transfer mechanism 11, the second transfer mechanism 12 and the separator unwinding mechanism 14 of the stacking system 10 can respectively provide the first electrode plate 21, the second electrode plate 22 and the separator 23 to the stacking device 13, the stacking device 13 can stack the first electrode plate 21, the separator 23 and the second electrode plate 22 to form a battery cell 20, thereby realizing automatic stacking, which is conducive to improving stacking quality and production efficiency.

The separator unwinding mechanism 14 has an output portion 141 for outputting the separator 23. The stacking device 13 comprises a stacking platform 131 and a first driving mechanism 132, and the stacking platform 131 has a first stacking position 138 and a second stacking position 139. Along the first direction, the first stacking position 138 and the second stacking position 139 are respectively located on two sides of the output portion 141. The stacking platform 131 is used for receiving the first electrode plate 21 at the first stacking position 138 and for receiving the second electrode plate 22 at the second stacking position 139. The first driving mechanism 132 is used for driving the stacking platform 131 to move along the first direction, so that the stacking platform 131 switches between the first stacking position 138 and the second stacking position 139. The first driving mechanism 132 can drive the stacking platform 131 to switch between the first stacking position 138 and the second stacking position 139. When the stacking platform 131 is located at the first stacking position 138, the stacking platform 131 is located at one side of the output portion 141 along the first direction. When the stacking platform 131 is located at the second stacking position 139, the stacking platform 131 is located at the other side of the output portion 141 along the first direction. The stacking platform 131 can receive the first electrode plate 21 at the first stacking position 138, one end of the separator 23 can be arranged on the stacking platform 131, and during the switching of the stacking platform 131 from the first position to the second position, since the first stacking position 138 and the second stacking position 139 are respectively located on two sides of the output portion 141, the separator 23 will gradually cover the first electrode plate 21. The stacking platform 131 reaches the second position, receives the second electrode plate 22, and then switches from the second position to the first position. During the switching of the stacking platform 131 from the second position to the first position, since the first stacking position 138 and the second stacking position 139 are respectively located on two sides of the output portion 141, the separator 23 will gradually cover the second electrode plate 22, the stacking platform 131 reaches the first position and can again receive the first electrode plate 21. As the stacking platform 131 switches back and forth between the first position and the second position, the first electrode plate 21, the separator 23 and the second electrode plate 22 are gradually stacked to form a battery cell 20.

The stacking device 13 comprises a pressing mechanism 133, the pressing mechanism 133 is disposed on the stacking platform 131, the pressing mechanism 133 is used for pressing the first electrode plate 21, the separator 23 or the second electrode plate 22 against the stacking platform 131. By providing the pressing mechanism 133, the first electrode plate 21, the separator 23 or the second electrode plate 22 is pressed against the stacking platform 131 during the switching of the stacking platform 131 between the first position and the second position, thereby reducing the risk of the first electrode plate 21, the separator 23 or the second electrode plate 22 detaching from the stacking platform 131, which is conducive to improving the reliability of the stacking device 13, improving stacking quality, reducing the risk of shutdown, and ensuring production efficiency to a certain extent.

The stacking system 10 comprises a first adhesive applying mechanism 15, the first adhesive applying mechanism 15 is disposed downstream of the stacking device 13, and the first adhesive applying mechanism 15 is used for applying a finishing adhesive or a corner adhesive to the battery cell 20. By arranging the first adhesive applying mechanism 15, after the stacking device 13 completes the stacking to form the battery cell 20, a finishing adhesive or a corner adhesive is applied to the battery cell 20 to stabilize the shape of the battery cell 20 and reduce the risk of collapse of the battery cell 20.

The first adhesive applying mechanism 15 comprises an adhesive unwinding mechanism 151, an adhesive applying component 152, a pulling mechanism 153, and a cutter mechanism 154. The adhesive unwinding mechanism 151 is used for unwinding an adhesive tape. The pulling mechanism 153 is used for pulling the adhesive tape so as to deliver the adhesive tape to the adhesive applying component 152. The cutter mechanism 154 is used for cutting off the portion of the adhesive tape between the pulling mechanism 153 and the adhesive applying component 152 to obtain an adhesive, and the adhesive applying component 152 is used for applying the adhesive to the battery cell 20. The pulling mechanism 153 can pull the adhesive tape, thereby unwinding the adhesive tape. In this way, the unwinding can be performed according to the required amount of adhesive tape. After the pulling mechanism 153 pulls the adhesive tape and supplies the adhesive tape to the adhesive applying component 152, the cutter mechanism 154 can cut off the adhesive tape between the pulling mechanism 153 and the adhesive applying component 152 to obtain an adhesive. The adhesive applying component 152 can apply the adhesive to the battery cell 20 to complete the application of a finishing adhesive or a corner adhesive. The first adhesive applying mechanism 15 is used to perform the adhesive applying operation, and the adhesive of the required length can be unwound each time as needed and applied to the battery cell 20. In this way, the length of the adhesive is appropriate, which can not only effectively stabilize the shape of the battery cell 20 and reduce the risk of collapse of the battery cell 20, but also not easily interfere with other components.

The stacking system 10 comprises a hot pressing device 16, the hot pressing device 16 is disposed downstream of the stacking device 13 and the hot pressing device 16 is used for hot pressing the battery cells 20. By providing the hot pressing device 16 to hot press the battery cell 20, on the one hand, the flatness of the battery cell 20 can be improved so that the thickness of the battery cell 20 meets the requirements and has high consistency. On the other hand, it can reduce the wrinkles of the separator 23, expel the air inside the battery cell 20, make the separator 23 and the first electrode plate 21, and the separator 23 and the second electrode plate 22 tightly attached together, shorten the diffusion distance of metal ions, and reduce the internal resistance of the battery cell 20.

The stacking system 10 comprises a tab welding mechanism 17, the tab welding mechanism 17 is disposed downstream of the stacking device 13, and the tab welding mechanism 17 is used for welding tabs on the battery cells 20. The tab welding mechanism 17 is provided to facilitate automatic welding of the tab for the battery cell 20, thereby improving the degree of automation of the stacking system 10.

The tab welding mechanism 17 comprises a first tab providing mechanism 171, a second tab providing mechanism, a first welding mechanism 173, a second welding mechanism, and a conveying mechanism 175. The first tab providing mechanism 171 is disposed at the first station, and the first tab providing mechanism 171 is used for providing the first tab 24. The second tab providing mechanism is disposed at the second station, and the second tab providing mechanism is used for providing the second tab 25. The first welding mechanism 173 is disposed at the third station, and the first welding mechanism 173 is used for welding the first tab 24 and the first electrode plate 21. The second welding mechanism is provided at the fourth station, and the second welding mechanism is used for welding the second tab 25 and the second electrode plate 22. The conveying mechanism 175 is used for conveying the battery cells 20 to the first station, the second station, the third station and the fourth station. The conveying mechanism 175 conveys the battery cell 20 to the first station, the second station, the third station and the fourth station, and when the battery cell 20 passes through the first station, the first tab providing mechanism 171 provides the first tab 24 to the battery cell 20. When the battery cell 20 passes through the second station, the second tab 25 providing mechanism provides the second tab 25 to the battery cell 20. When the battery cell 20 passes through the third station, the first welding mechanism 173 welds the first tab 24 to the battery cell 20. When the battery cell 20 passes through the fourth station, the second welding mechanism welds the second tab 25 to the battery cell 20 to complete the automatic welding of the first electrode plate 21 and the battery cell 20 and the automatic welding of the second electrode plate 22 and the battery cell 20, with a high degree of automation.

The above descriptions are merely preferred embodiments of the present application and are not intended to limit the present application. For those skilled in the art, the present application may have various modifications and changes. Any modification, equivalent replacement, improvement, and the like made within the spirit and principle of the present application shall fall within the scope of protection of the present application.

## Claims

1. A stacking system, comprising:
a first transfer mechanism, used for transferring a first electrode plate;
a second transfer mechanism, used for transferring a second electrode plate, the polarity of the second electrode plate being opposite to that of the first electrode plate;
a separator unwinding mechanism, used for unwinding a separator;
a stacking device, used for receiving the first electrode plate, the separator and the second electrode plate, and for stacking the first electrode plate, the separator and the second electrode plate to form a battery cell.

2. The stacking system according to claim 1, wherein the separator unwinding mechanism has an output portion for outputting the separator;
the stacking device comprises:
a stacking platform having a first stacking position and a second stacking position, wherein the first stacking position and the second stacking position are respectively located on two sides of the output portion along a first direction; the stacking platform is used for receiving the first electrode plate at the first stacking position and for receiving the second electrode plate at the second stacking position;
a first driving mechanism, used for driving the stacking platform to move along the first direction, so that the stacking platform switches between the first stacking position and the second stacking position.

3. The stacking system according to claim 2, wherein the stacking device comprises a pressing mechanism, the pressing mechanism is arranged on the stacking platform, and the pressing mechanism is used for pressing the first electrode plate, the separator or the second electrode plate against the stacking platform.

4. The stacking system according to claim 3, wherein the pressing mechanism comprises:
a pressing member, used for pressing the first electrode plate, the separator or the second electrode plate against the stacking platform;
a second driving mechanism connected to the pressing member, wherein the second driving mechanism is used for driving the pressing member to move along a second direction and a third direction, the second direction is the stacking direction of the first electrode plate, the separator and the second electrode plate, the third direction intersects with the second direction, and the first direction intersects with the plane where the second direction and the third direction are located.

5. The stacking system according to claim 4, wherein both sides of the stacking platform are provided with the pressing member along the third direction.

6. The stacking system according to claim 4 or 5, wherein the pressing member comprises a pressing portion, the pressing portion is used for contacting the first electrode plate, the separator or the second electrode plate, and the pressing portion is in a sheet shape.

7. The stacking system according to any one of claims 2 to 6, wherein the stacking device comprises a first smoothing mechanism, and the first smoothing mechanism is used for smoothing the separator when the stacking platform switches between the first stacking position and the second stacking position.

8. The stacking system according to claim 7, wherein the stacking device comprises a frame, the first smoothing mechanism comprises a first smoothing member, the first smoothing member is used for smoothing the separator, the first smoothing member is connected to the frame, and the stacking platform is movably provided on the frame along the first direction.

9. The stacking system according to claim 8, wherein the first smoothing member is made of a flexible material.

10. The stacking system according to claim 8 or 9, wherein the output portion is connected to the frame.

11. The stacking system according to any one of claims 2 to 10, wherein the stacking device comprises a flipping mechanism, the flipping mechanism and the stacking platform are arranged along the first direction, the stacking platform moves along the first direction to transport the battery cell to the flipping mechanism, and the flipping mechanism is used for driving the battery cell to flip so that the separator covers the outside of the battery cell.

12. The stacking system according to claim 11, wherein the stacking device comprises a second smoothing mechanism, the second smoothing mechanism is used for smoothing at least a portion of the separator located between the flipping mechanism and the output portion along the extension direction of the separator.

13. The stacking system according to claim 12, wherein the second smoothing mechanism comprises a third driving mechanism and a second smoothing member, the second smoothing member is connected to the third driving mechanism, and the third driving mechanism is used for driving the second smoothing member to move along the extension direction of the separator so that the second smoothing member smooths the separator.

14. The stacking system according to claim 13, wherein the second smoothing member is in a wheel shape, and the third driving mechanism is further used for driving the second smoothing member to rotate.

15. The stacking system according to any one of claims 1 to 14, wherein the separator unwinding mechanism comprises a cutter unit, and the cutter unit is used for cutting off the separator.

16. The stacking system according to any one of claims 1 to 15, wherein the first transfer mechanism comprises a first pickup unit and a first detection unit, the first pickup unit is used for picking up the first electrode plate, the first detection unit is used for detecting the number of the first electrode plates picked up by the first pickup unit in a single time, and the first pickup unit responds to the first detection unit; and/or
the second transfer mechanism comprises a second pickup unit and a second detection unit, the second pickup unit is used for picking up the second electrode plate, the second detection unit is used for detecting the number of the second electrode plates picked up by the second pickup unit in a single time, and the second pickup unit responds to the second detection unit.

17. The stacking system according to claim 16, wherein the first detection unit comprises a first thickness detection unit, the first thickness detection unit is used for detecting the thickness of the first electrode plates picked up by the first pickup unit in a single time to obtain the number of the first electrode plates; and/or
the second detection unit comprises a second thickness detection unit, and the second thickness detection unit is used for detecting the thickness of the second electrode plates picked up by the second pickup unit in a single time to obtain the number of the second electrode plates.

18. The stacking system according to any one of claims 1 to 17, wherein the stacking system further comprises a first detection mechanism, the first detection mechanism is arranged upstream of the stacking device, the first detection mechanism is used for detecting the appearance of the first electrode plate and the second electrode plate, and the first transfer mechanism and the second transfer mechanism both respond to the first detection mechanism.

19. The stacking system according to any one of claims 1 to 18, wherein the stacking system comprises a first adhesive applying mechanism, the first adhesive applying mechanism is arranged downstream of the stacking device, and the first adhesive applying mechanism is used for applying a finishing adhesive or a corner adhesive to the battery cell.

20. The stacking system according to claim 19, wherein the first adhesive applying mechanism comprises:
an adhesive unwinding mechanism, used for unwinding an adhesive tape;
an adhesive applying component;
a pulling mechanism, used for pulling the adhesive tape to deliver the adhesive tape to the adhesive applying component;
a cutter mechanism, used for cutting off the portion of the adhesive tape between the pulling mechanism and the adhesive applying component to obtain an adhesive, and the adhesive applying component is used for applying the adhesive to the battery cell.

21. The stacking system according to claim 20, wherein the pulling mechanism comprises a first clamping unit and a second clamping unit, both the first clamping unit and the second clamping unit are used for clamping the adhesive tape, and the second clamping unit is capable of moving toward or away from the first clamping unit.

22. The stacking system according to claim 20 or 21, wherein the adhesive applying component comprises a fourth driving mechanism and an adsorption member, the adsorption member is used for adsorbing the adhesive, the fourth driving mechanism is connected to the adsorption member, and the fourth driving mechanism is used for driving the adsorption member to move so as to apply the adhesive to the battery cell.

23. The stacking system according to any one of claims 20 to 22, wherein the stacking system comprises a plurality of the first adhesive applying mechanisms, and the plurality of the first adhesive applying mechanisms are all used for applying the adhesive to the battery cell.

24. The stacking system according to any one of claims 1 to 23, wherein the stacking system comprises a hot pressing device, the hot pressing device is arranged downstream of the stacking device, and the hot pressing device is used for hot pressing the battery cell.

25. The stacking system according to claim 24, wherein the hot pressing device comprises:
a hot pressing workbench, used for placing the battery cell;
a hot pressing member, arranged opposite to the hot pressing workbench;
a fifth driving mechanism connected to the hot pressing member, wherein the fifth driving mechanism is used for driving the hot pressing member toward the battery cell so that the hot pressing member hot presses the battery cell.

26. The stacking system according to claim 25, wherein the hot pressing member is provided with a first probe and a second probe, and the first probe and the second probe are used for being electrically connected to the first electrode plate and the second electrode plate of the battery cell respectively when the hot pressing member hot presses the battery cell.

27. The stacking system according to claim 25 or 26, wherein the surface of the hot pressing member facing the hot pressing workbench is provided with an anti-sticking coating.

28. The stacking system of claim 27, wherein the anti-sticking coating comprises a ceramic layer.

29. The stacking system according to any one of claims 1 to 28, wherein the stacking system comprises a tab welding mechanism, the tab welding mechanism is arranged downstream of the stacking device, and the tab welding mechanism is used for welding tabs on the battery cell.

30. The stacking system according to claim 29, wherein the tab welding mechanism comprises:
a first tab providing mechanism, disposed at a first station, the first tab providing mechanism being used for providing a first tab;
a second tab providing mechanism, disposed at a second station, the second tab providing mechanism being used for providing a second tab;
a first welding mechanism, disposed at a third station, the first welding mechanism being used for welding the first tab and the first electrode plate;
a second welding mechanism, disposed at a fourth station, the second welding mechanism being used for welding the second tab and the second electrode plate;
a conveying mechanism, used for conveying the battery cell to the first station, the second station, the third station and the fourth station.

31. The stacking system according to claim 30, wherein the conveying mechanism comprises a turntable, and the first tab providing mechanism, the second tab providing mechanism, the first welding mechanism, and the second welding mechanism are arranged along the circumferential direction of the turntable.

32. The stacking system according to claim 31, wherein a positioning clamp is provided on the turntable, and the positioning clamp is used for positioning the battery cell, the first tab and the second tab.

33. The stacking system according to claim 32, wherein the positioning clamp comprises a supporting platform, a first clamping jaw, a second clamping jaw and a third clamping jaw, the supporting platform is connected to the turntable, the first clamping jaw, the second clamping jaw and the third clamping jaw are connected to the supporting platform, the first clamping jaw is used for positioning the battery cell on the supporting platform, the second clamping jaw is used for positioning the first tab on the battery cell, and the third clamping jaw is used for positioning the second tab on the battery cell.

34. The stacking system according to any one of claims 30 to 33, wherein the first welding mechanism comprises a first welding head and a first dust removal mechanism, the first welding head is used for welding the first tab and the first electrode plate, and the first dust removal mechanism is used for removing dust from the first welding head; and/or
the second welding mechanism comprises a second welding head and a second dust removal mechanism, the second welding head is used for welding the second tab and the second electrode plate, and the second dust removal mechanism is used for removing dust from the second welding head.

35. The stacking system according to any one of claims 30 to 34, wherein the tab welding mechanism further comprises a second adhesive applying mechanism, the second adhesive applying mechanism is arranged at a fifth station, the conveying mechanism is also used for conveying the battery cell to the fifth station, and the second adhesive applying mechanism is used for applying the adhesive at the welding position between the first tab and the first electrode plate and at the welding position between the second tab and the second electrode plate.

36. The stacking system according to claim 35, wherein the tab welding mechanism comprises a second detection mechanism, the second detection mechanism is arranged at a sixth station, the conveying mechanism is also used for conveying the battery cell to the sixth station, and the second detection mechanism is used for detecting the appearance of the battery cell.

37. The stacking system according to any one of claims 1 to 36, wherein the stacking system comprises a first adhesive applying mechanism, a hot pressing device and a tab welding mechanism, the first adhesive applying mechanism is used for applying a finishing adhesive or a corner adhesive to the battery cell, the hot pressing device is used for hot pressing the battery cell, the tab welding mechanism is used for welding tabs on the battery cell, the first adhesive applying mechanism is arranged downstream of the stacking device, the hot pressing device is arranged downstream of the first adhesive applying mechanism, and the tab welding mechanism is arranged downstream of the hot pressing device.
